(19) Europäisches Patentamt
European Patent Office
Office européen des brevets

(11) **EP 4 318 322 A1**

(12) **EUROPEAN PATENT APPLICATION**
published in accordance with Art. 153(4) EPC

(43) Date of publication:
**07.02.2024 Bulletin 2024/06**

(21) Application number: **22790962.9**

(22) Date of filing: **15.04.2022**

(51) International Patent Classification (IPC):
**G06N 3/08** (2023.01)

(52) Cooperative Patent Classification (CPC):
**G06F 16/33; G06F 40/211; G06N 3/02; G06N 3/08;
G06V 10/774; G06V 10/82**

(86) International application number:
**PCT/CN2022/087028**

(87) International publication number:
**WO 2022/222854 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.04.2021 CN 202110415349**

(71) Applicant: **Huawei Technologies Co., Ltd.
Shenzhen, Guangdong 518129 (CN)**

(72) Inventors:
• **WEI, Junqiu
Shenzhen, Guangdong 518129 (CN)**

• **LIAO, Yi
Shenzhen, Guangdong 518129 (CN)**
• **JIANG, Xin
Shenzhen, Guangdong 518129 (CN)**
• **LIU, Qun
Shenzhen, Guangdong 518129 (CN)**
• **QIAN, Li
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND RELATED DEVICE**

(57) A data processing method includes: obtaining a first embedding vector for indicating a known data unit and a position of the known data unit and a second embedding vector for indicating a position of a to-be-predicted data unit; processing the first embedding vector by using a target encoder, to obtain an output vector; and processing the output vector and the second embedding vector by using a target prediction network, to obtain a to-be-predicted data unit. According to the method, M pieces of additional position information do not need to be separately set as input of the target encoder, and a quantity of latent variables of intermediate output of the target encoder is also consistent with a quantity of input embedding vectors, thereby reducing a computation amount and memory consumption of the target encoder.

Obtain M first embedding vectors and a second embedding vector, where each first embedding vector indicates one known data unit in target data and a first position of the known data unit in the target data, the second embedding vector indicates a second position, in the target data in the target data, of a first to-be-predicted data unit, and M is a positive integer — 601

Process the M first embedding vectors by using a target encoder, to obtain M first output vectors corresponding to M known data units, where a first output vector corresponding to each known data unit is generated based on the M first embedding vectors — 602

Process the M first output vectors and the second embedding vector by using a target prediction network, to obtain the first to-be-predicted data unit — 603

FIG. 6a

EP 4 318 322 A1

**Description**

This application claims priority to Chinese Patent Application No. 202110415349.1, filed with the China National Intellectual Property Administration on April 18, 2021, and entitled "DATA PROCESSING METHOD AND RELATED DEVICE", which is incorporated herein by reference in its entirety.

**TECHNICAL FIELD**

This application relates to the artificial intelligence field, and in particular, to a data processing method and a related device.

**BACKGROUND**

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is intended to study design principles and implementation methods of various intelligent machines, so that the machines have perception, inference, and decision-making functions.

A language model (Language Model) is a model that can predict an unknown word in a sentence based on a given semantic segment. For example, a given natural language sequence segment is "Huawei_ _ are very good." The language model may generate an unknown word based on this segment. For example, in this example, the language model may generate the word "mobile phones" based on the given segment, to obtain a sentence "Huawei mobile phones are very good".

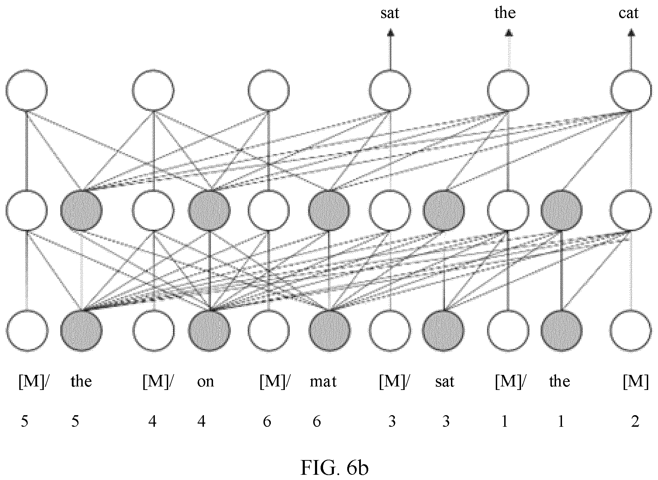

In an existing natural language generation model (with reference to FIG. 6b), an autoencoder model and an autoregressive language model are converged. Compared with the autoencoder model and the autoregressive language model, a quantity of hidden states is doubled in this model. A white part corresponds to the autoencoder model, and a gray part corresponds to the autoregressive language model. A latent variable related to the autoencoder model indicates position information. The autoregressive model is used to provide context information for prediction of the autoencoder language model. A computation amount and memory consumption of this model are twice as much as those of each of the autoencoder model and the autoregressive model. Therefore, a language model with a smaller computation amount and less memory consumption needs to be provided.

**SUMMARY**

According to a first aspect, this application provides a data processing method. The method includes: obtaining M first embedding vectors and a second embedding vector, where each first embedding vector indicates one known data unit in target data and a first position of the known data unit in the target data, the second embedding vector indicates a second position, in the target data, of a first to-be-predicted data unit in the target data, and M is a positive integer.

The target data is data with missing data. The target data includes non-missing data (referred to as a known data unit in this embodiment of this application) and missing data (referred to as a to-be-predicted data unit in this embodiment of this application, for example, a first to-be-predicted data unit and a second to-be-predicted data unit). The known data unit is a data unit in the non-missing data. For example, the target data may be text data. In this case, the known data unit in the target data may be a known word or a known letter in the text data, and the to-be-predicted data unit may be a to-be-predicted word or a to-be-predicted letter in the text data. For example, the target data may be speech data. In this case, the known data unit in the target data may be a known audio sequence in the speech data, and the to-be-predicted data unit may be a to-be-predicted audio sequence in the speech data. For example, the target data may be image data. In this case, the known data unit in the target data may be a known sample in the speech data, and the to-be-predicted data unit may be a to-be-predicted sample in the speech data. It should be understood that data granularities of the known data unit and the to-be-predicted data unit are related to a type of the target data. The data granularities of the known data unit and the to-be-predicted data unit may be a minimum data unit in the target data or a plurality of data units including minimum data units. The granularities of the known data unit and the to-be-predicted data unit are not limited herein.

The method further includes: processing the M first embedding vectors by using a target encoder, to obtain M first output vectors corresponding to M known data units, where a first output vector corresponding to each known data unit is generated based on the M first embedding vectors.

Each first output vector is obtained based on the M first embedding vectors. It may be understood that each first output vector may use the M first embedding vectors as a reference. In other words, when each first output vector is generated, each first embedding vector is visible, or each first output vector has a dependency relationship with the M first embedding vectors.

In an implementation, the target encoder may be a transformer transformer layer, and that each first output vector is obtained based on the M first embedding vectors may be understood as that there is an attention association between any two of the M first embedding vectors.

The method further includes: processing the M first output vectors and the second embedding vector by using a target prediction network, to obtain the first to-be-predicted data unit.

In this embodiment of this application, for the M first embedding vectors corresponding to the M known data units, the target encoder may use the M first embedding vectors as input. The first embedding vectors include position information of the known data units and data information of the known data units. M pieces of additional position information do not need to be separately set as the input of the target encoder, and a quantity of latent variables of intermediate output of the target encoder is also consistent with a quantity of input embedding vectors, thereby reducing a computation amount and memory consumption of the target encoder.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the target encoder is a first transformer transformer layer, and the target prediction network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In other words, input of each transformer sub-layer includes M eigenvectors corresponding to the M known data units, and output of each transformer sub-layer includes M output vectors corresponding to the M known data units. In this way, the quantity of latent variables of the intermediate output of the target encoder is also consistent with the quantity of input embedding vectors, thereby reducing the computation amount and the memory consumption of the target encoder.

In a possible implementation, the target encoder includes an attention head, and the processing the M first embedding vectors by using a target encoder includes:

obtaining attention information, where the attention information indicates that there is an attention association between any two of the M first embedding vectors when the attention head processes the M first embedding vectors; and processing the M first embedding vectors based on the attention information by using the target encoder.

In a possible implementation, the method further includes:
performing embedding processing on the M known data units in the target data by using an embedding layer, to obtain M third embedding vectors, where the embedding layer may be referred to as an input embedding (input embedding) layer. Current input may be the M known data units. After obtaining the current input, the embedding layer may perform embedding processing on the various known data units in the current input, to obtain the embedding vectors (that is, the third embedding vectors) corresponding to the various known data units.

The method further includes: obtaining a position vector of each of the M known data units, where the position vector indicates the first position. In some embodiments, the position vector of each of the M known data units may be obtained. The position vector indicates the first position. The first position indicates a position of a known data unit in the target data. Specifically, the first position may indicate the relative position relationship between the known data unit in the target data and the another known data unit other than the known data unit and the relative position relationship between the known data unit and the first to-be-predicted data unit.

The method further includes: integrating each of the M third embedding vectors and a corresponding position vector, to obtain the M first embedding vectors. It should be understood that an integration manner may be performing an addition operation on the third embedding vector and the position vector, or performing another operation so that the first embedding vector can carry a known data unit in the target data and information about a first position of the known data unit in the target data. A specific integration manner is not limited herein.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position of the second to-be-predicted data unit in the target data;

processing the M first embedding vectors and the fourth embedding vector by using the target encoder, to obtain the M known data units and M+1 second output vectors corresponding to the first to-be-predicted data unit; and

processing the M+1 second output vectors and the fifth embedding vector by using the target prediction network, to obtain the second to-be-predicted data unit.

In this embodiment of this application, prediction is performed in a random order manner. Order information of a to-be-predicted data unit is fully used, and the order information is explicitly integrated into an output vector.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or

the target data is image data, the known data unit is a known sample in the image data, and the first to-be-predicted data unit is a to-be-predicted sample in the image data.

According to a second aspect, this application provides a data processing method. The method includes:

obtaining M first embedding vectors and a second embedding vector, where each first embedding vector indicates one data unit in target data and a first position of the data unit in the target data, the second embedding vector indicates a target processing task, and M is a positive integer;

processing the M first embedding vectors by using a target encoder, to obtain M output vectors corresponding to M data units, where an output vector corresponding to each data unit is generated based on the M first embedding vectors; and

performing, by using a task network, processing corresponding to the target processing task on the M output vectors and the second embedding vector, to obtain a task processing result.

In a possible implementation, the first position indicates a relative position relationship between the data unit and another data unit.

In a possible implementation, the target encoder is a first transformer transformer layer, and the task network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M output vectors.

In a possible implementation, the target encoder includes an attention head, and the processing the M first embedding vectors by using a target encoder includes:

obtaining attention information, where the attention information indicates that there is an attention association between any two of the M first embedding vectors when the attention head processes the M first embedding vectors; and

processing the M first embedding vectors based on the attention information by using the target encoder.

In a possible implementation, the target data is text data, and the data unit is a word in the text data;

the target data is speech data, and the known data unit is an audio sequence in the speech data; or
the target data is image data, and the known data unit is a sample in the image data.

In a possible implementation, the target processing task includes short text classification, long text classification, natural language inference, text similarity matching, or text emotion classification.

According to a third aspect, this application provides a data processing method. The method includes:

obtaining a first encoder, a first prediction network, M first embedding vectors, and a second embedding vector, where each first embedding vector indicates one known data unit in target data and a first position of the known data unit in the target data, the second embedding vector indicates a second position, in the target data, of a first to-be-predicted data unit in the target data, and M is a positive integer;
processing the M first embedding vectors by using the first encoder, to obtain M first output vectors corresponding to M known data units, where a first output vector corresponding to each known data unit is generated based on the M first embedding vectors;
processing the M first output vectors and the second embedding vector by using the first prediction network, to obtain a third predicted data unit; and
updating the first encoder and the first prediction network based on a difference between the third predicted data unit and the first to-be-predicted data unit, to obtain a target encoder and a target prediction network.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the first encoder is a first transformer transformer layer, and the first prediction network is a second transformer layer.

In a possible implementation, the first transformer layer includes a plurality of serial transformer sub-layers, and the processing the M first embedding vectors by using the first encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position, in the target data, of the second to-be-predicted data unit in the target data;
processing the M first embedding vectors and the fourth embedding vector by using the first encoder, to obtain the M known data units and M+1 second output vectors corresponding to the first to-be-predicted data unit; and
processing the M+1 second output vectors and the fifth embedding vector by using the first prediction network, to obtain a fourth to-be-predicted data unit; and
the updating the first encoder and the first prediction network based on a difference between the third predicted data unit and the first to-be-predicted data unit, to obtain a target encoder and a target prediction network includes:
updating the first encoder and the first prediction network based on the difference between the third predicted data unit and the first to-be-predicted data unit and a difference between the fourth predicted data unit and the second to-be-predicted data unit, to obtain the target encoder and the target prediction network.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or
the target data is image data, the known data unit is a known sample in the image data, and the first to-be-predicted data unit is a to-be-predicted sample in the image data.

According to a fourth aspect, this application provides a data processing apparatus, including:

an obtaining module, configured to obtain M first embedding vectors and a second embedding vector, where each first embedding vector indicates one known data unit in target data and a first position of the known data unit in the target data, the second embedding vector indicates a second position, in the target data, of a first to-be-predicted data unit in the target data, and M is a positive integer;
an encoding module, configured to process the M first embedding vectors by using a target encoder, to obtain M first output vectors corresponding to M known data units, where a first output vector corresponding to each known data unit is generated based on the M first embedding vectors; and
a prediction module, configured to process the M first output vectors and the second embedding vector by using a target prediction network, to obtain the first to-be-predicted data unit.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the target encoder is a first transformer transformer layer, and the target prediction network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In a possible implementation, the target encoder includes an attention head, and the encoding module is configured to: obtain attention information, where the attention information indicates that there is an attention association between any two of the M first embedding vectors when the attention head processes the M first embedding vectors; and process the M first embedding vectors based on the attention information by using the target encoder.

In a possible implementation, the apparatus further includes:

an embedding module, configured to: perform embedding processing on the M known data units in the target data by using an embedding layer, to obtain M third embedding vectors;
obtain a position vector of each of the M known data units, where the position vector indicates the first position; and
integrate each of the M third embedding vectors and a corresponding position vector, to obtain the M first embedding vectors.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position of the second to-be-predicted data unit in the target data;
processing the M first embedding vectors and the fourth embedding vector by using the target encoder, to obtain the M known data units and M+1 second output vectors corresponding to the first to-be-predicted data unit; and
processing the M+1 second output vectors and the fifth embedding vector by using the target prediction network, to obtain the second to-be-predicted data unit.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or

the target data is image data, the known data unit is a known sample in the image data, and the first to-be-predicted data unit is a to-be-predicted sample in the image data.

According to a fifth aspect, this application provides a data processing apparatus, including:

an obtaining module, configured to obtain M first embedding vectors and a second embedding vector, where each first embedding vector indicates one data unit in target data and a first position of the data unit in the target data, the second embedding vector indicates a target processing task, and M is a positive integer;

an encoding module, configured to process the M first embedding vectors by using a target encoder, to obtain M output vectors corresponding to M data units, where an output vector corresponding to each data unit is generated based on the M first embedding vectors; and

a task processing module, configured to perform, by using a task network, processing corresponding to the target processing task on the M output vectors and the second embedding vector, to obtain a task processing result.

In a possible implementation, the first position indicates a relative position relationship between the data unit and another data unit.

In a possible implementation, the target encoder is a first transformer transformer layer, and the task network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M output vectors.

In a possible implementation, the target encoder includes an attention head, and the encoding module is configured to: obtain attention information, where the attention information indicates that there is an attention association between any two of the M first embedding vectors when the attention head processes the M first embedding vectors; and process the M first embedding vectors based on the attention information by using the target encoder.

In a possible implementation, the target data is text data, and the data unit is a word in the text data;

the target data is speech data, and the known data unit is an audio sequence in the speech data; or

the target data is image data, and the known data unit is a sample in the image data.

In a possible implementation, the target processing task includes short text classification, long text classification, natural language inference, text similarity matching, or text emotion classification.

According to a sixth aspect, this application provides a data processing apparatus, including:

an obtaining module, configured to obtain a first encoder, a first prediction network, M first embedding vectors, and a second embedding vector, where each first embedding vector indicates one known data unit in target data and a first position of the known data unit in the target data, the second embedding vector indicates a second position, in the target data, of a first to-be-predicted data unit in the target data, and M is a positive integer;

an encoding module, configured to process the M first embedding vectors by using the first encoder, to obtain M first output vectors corresponding to M known data units, where a first output vector corresponding to each known data unit is generated based on the M first embedding vectors;

a prediction module, configured to process the M first output vectors and the second embedding vector by using the first prediction network, to obtain a third predicted data unit; and

a model training module, configured to update the first encoder and the first prediction network based on a difference between the third predicted data unit and the first to-be-predicted data unit, to obtain a target encoder and a target prediction network.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the first encoder is a first transformer transformer layer, and the first prediction network is a second transformer layer.

In a possible implementation, the first transformer layer includes a plurality of serial transformer sub-layers, and the processing the M first embedding vectors by using the first encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position, in the target data, of the second to-be-predicted data unit in the target data;

processing the M first embedding vectors and the fourth embedding vector by using the first encoder, to obtain the M known data units and M+1 second output vectors corresponding to the first to-be-predicted data unit; and processing the M+1 second output vectors and the fifth embedding vector by using the first prediction network, to obtain a fourth to-be-predicted data unit; and

the updating the first encoder and the first prediction network based on a difference between the third predicted data unit and the first to-be-predicted data unit, to obtain a target encoder and a target prediction network includes: updating the first encoder and the first prediction network based on the difference between the third predicted data unit and the first to-be-predicted data unit and a difference between the fourth predicted data unit and the second to-be-predicted data unit, to obtain the target encoder and the target prediction network.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or

the target data is image data, the known data unit is a known sample in the image data, and the first to-be-predicted data unit is a to-be-predicted sample in the image data.

According to a seventh aspect, an embodiment of this application provides an execution device that may include a memory, a processor, and a bus system. The memory is configured to store a program. The processor is configured to execute the program in the memory, to perform the method in the first aspect and any optional implementation of the first aspect, or the method in the second aspect and any optional implementation of the second aspect.

According to an eighth aspect, an embodiment of this application provides a training device that may include a memory, a processor, and a bus system. The memory is configured to store a program. The processor is configured to execute the program in the memory, to perform the method in the third aspect and any optional implementation of the third aspect.

According to a ninth aspect, an embodiment of this application provides a computer-readable storage medium. The computer-readable storage medium stores a computer program. When the computer program is run on a computer, the computer is enabled to perform the method in the first aspect and any optional implementation of the first aspect, the method in the second aspect and any optional implementation of the second aspect, and the method in the third aspect and any optional implementation of the third aspect.

According to a tenth aspect, an embodiment of this application provides a computer program. When the computer program is run on a computer, the computer is enabled to perform the method in the first aspect and any optional implementation of the first aspect, the method in the second aspect and any optional implementation of the second aspect, and the method in the third aspect and any optional implementation of the third aspect.

According to an eleventh aspect, this application provides a chip system. The chip system includes a processor, configured to support an execution device or a training device in implementing functions in the foregoing aspects, for example, send or process data or information in the foregoing methods. In a possible design, the chip system further includes a memory. The memory is configured to store program instructions and data that are necessary for the execution device or the training device. The chip system may include a chip, or may include a chip and another discrete component.

An embodiment of this application provides a data processing method. The method includes: obtaining M first embedding vectors and a second embedding vector, where each first embedding vector indicates one known data unit in target data and a first position of the known data unit in the target data, the second embedding vector indicates a second position, in the target data, of a first to-be-predicted data unit in the target data, and M is a positive integer; processing the M first embedding vectors by using a target encoder, to obtain M first output vectors corresponding to M known data units, where a first output vector corresponding to each known data unit is generated based on the M first embedding vectors; and processing the M first output vectors and the second embedding vector by using a target prediction network, to obtain the first to-be-predicted data unit. In the foregoing manner, for the M first embedding vectors corresponding to the M known data units, the target encoder may use the M first embedding vectors as input. The first embedding vectors include position information and data information of the known data units. M pieces of additional position information do not need to be separately set as the input of the target encoder, and a quantity of latent variables of intermediate output of the target encoder is also consistent with a quantity of input embedding vectors, thereby reducing a computation amount and memory consumption of the target encoder.

## BRIEF DESCRIPTION OF DRAWINGS

FIG. 1 is a schematic diagram of a structure of an artificial intelligence main framework;

FIG. 2 shows a natural language processing system;

FIG. 3a shows another natural language processing system;

FIG. 3b is a schematic diagram of a structure of a system;

FIG. 4 is a schematic diagram of a device related to natural language processing according to an embodiment of this application;

FIG. 5 is a schematic diagram of an architecture of a transformer layer;

FIG. 6a is a schematic diagram of an embodiment of a data processing method according to an embodiment of this application;

FIG. 6b is a schematic diagram of an embodiment of a data processing method;

FIG. 6c is a schematic diagram of an embodiment of a data processing method according to an embodiment of this application;

FIG. 7 is a schematic diagram of a structure of a neural network model according to an embodiment of this application;

FIG. 8 is a schematic diagram of a structure of a transformer layer;

FIG. 9 is a schematic diagram of operations of an attention head head;

FIG. 10 to FIG. 19 are schematic diagrams of embodiments of a data processing method according to embodiments of this application;

FIG. 20 is a schematic diagram of a structure of a data processing apparatus according to an embodiment of this application;

FIG. 21 is a schematic diagram of a structure of a data processing apparatus according to an embodiment of this application;

FIG. 22 is a schematic diagram of a structure of a data processing apparatus according to an embodiment of this application;

FIG. 23 is a schematic diagram of a structure of an execution device according to an embodiment of this application;

FIG. 24 is a schematic diagram of a structure of a training device according to an embodiment of this application; and

FIG. 25 is a schematic diagram of a structure of a chip according to an embodiment of this application.

**EP 4 318 322 A1**

## DESCRIPTION OF EMBODIMENTS

The following describes embodiments of the present invention with reference to the accompanying drawings in embodiments of the present invention. Terms used in embodiments of the present invention are merely used to explain specific embodiments of the present invention, but are not intended to limit the present invention.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances, and this is merely a discrimination manner for describing objects having a same attribute in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, product, or device.

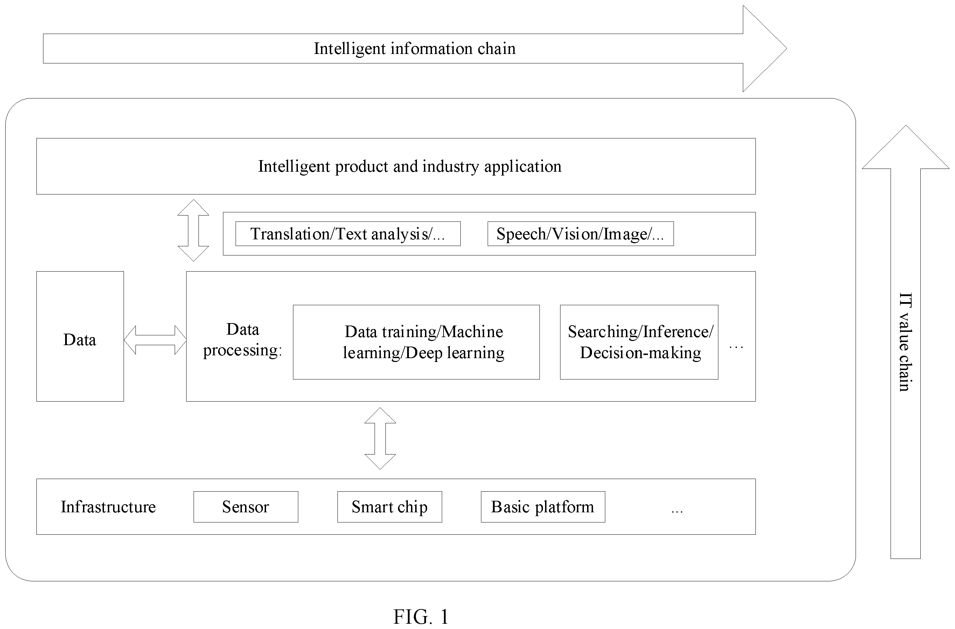

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the processes may be general processes of intelligent information perception, intelligent information representation and formation, intelligent inference, intelligent decision-making, and intelligent execution and output. In this process, the data undergoes a refinement process of "data-information-knowledge-intelligence". The "IT value chain" reflects the value brought by artificial intelligence to the information technology industry from an industrial ecology process of an underlying infrastructure, information (providing and processing technology implementation), and a system of artificial intelligence.

### (1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and text, and further relates to Internet of things data of a conventional device; and includes service data of an existing system and perception data such as force, displacement, a liquid level, a temperature, and humidity.

### (3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formatted information according to an inference control policy. A typical function is searching and matching.

Decision-making is a process in which a decision is made after intelligent information is inferred, and usually provides functions such as classification, ranking, and prediction.

### (4) General capability

After data processing mentioned above is performed on data, some general capabilities may further be formed

**10**

based on a data processing result, for example, an algorithm or a general system, such as translation, text analysis, computer vision processing, speech recognition, and image recognition.

(5) Intelligent product and industry application

The intelligent product and the industry application are a product and an application of an artificial intelligence system in various fields, and are package of an overall solution of the artificial intelligence, so that decision-making for intelligent information is productized and an application is implemented. Application fields mainly include an intelligent terminal, intelligent transportation, intelligent health care, autonomous driving, a safe city, and the like.

This application may be applied to the natural language processing field, the image processing field, and the audio and video processing field in the artificial intelligence field. The following uses natural language processing as an example to describe a plurality of application scenarios of implementing a plurality of products.

To better understand the solutions in embodiments of this application, the following briefly describes possible application scenarios of embodiments of this application with reference to FIG. 1 to FIG. 3a.

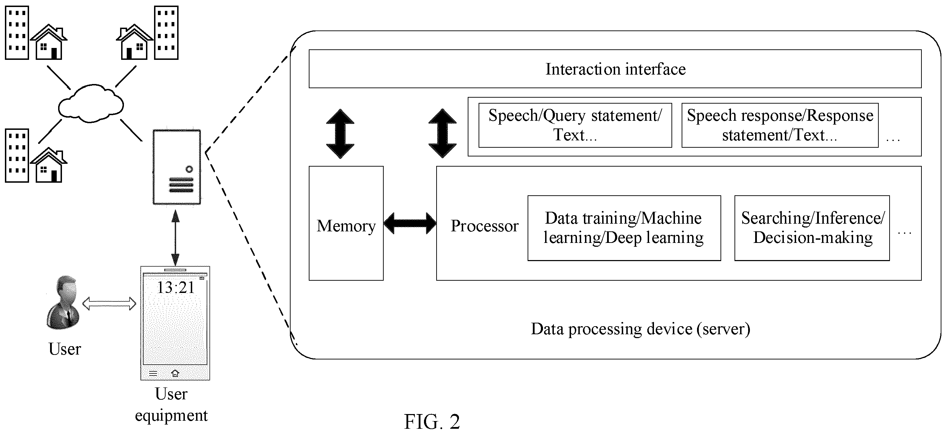

FIG. 2 shows a natural language processing system. The natural language processing system includes user equipment and a data processing device. The user equipment includes an intelligent terminal such as a mobile phone, a personal computer, or an information processing center. The user equipment is an initiating end of natural language data processing. As an initiator of a request for language questioning/answering, querying, or the like, a user usually initiates the request by using the user equipment.

The data processing device may be a device or a server with a data processing function, such as a cloud server, a network server, an application server, or a management server. The data processing device receives a query statement/speech/text or the like from the intelligent terminal through an interaction interface; then performs, by using a memory storing data and a processor processing data, language data processing in a manner of machine learning, deep learning, searching, inference, decision-making, or the like; and feeds back a processing result to the user equipment. The memory in the data processing device may be a general name, including a local storage and a database storing historical data. The database may be in the data processing device, or may be in another network server.

In the natural language processing system shown in FIG. 2, the user equipment may receive an instruction of the user. For example, the user equipment may receive a text segment input by the user, and then initiate a request to the data processing device, so that the data processing device executes a natural language processing application (for example, natural language generation, text classification, text inference, named entity recognition, or translation) on the text segment obtained by the user equipment, to obtain a processing result (for example, a predicted word result, a classification result, an inference result, a named entity recognition result, or a translation result) of the corresponding natural language processing application for the text segment.

Natural language generation is used as an example. Natural language generation (natural language generation) may also be referred to as a text prediction task or a natural language synthesis task, and is a task of generating a missing text or a subsequent text when a text segment is given. Natural language generation is widely used in scenarios such as a search engine and an input method. Following input of the user may be predicted when the user inputs a part of a text, to greatly improve efficiency of using the product by the user. In addition, a text with a missing text can be restored. For example, in this embodiment of this application, the user equipment may receive a segment of text data (for example, target data described in embodiments of this application) input by the user. The text data includes a known word and a to-be-predicted word. The to-be-predicted word is invisible. Only a position of the to-be-predicted word in the text data is known. Then, the user equipment may initiate a request (the request carries the text data) to the data processing device. Therefore, the data processing device predicts the to-be-predicted word in the text data to obtain the to-be-predicted word, and feeds back the to-be-predicted word to the user equipment.

For example, the user equipment may receive a segment of text data input by the user, and then initiate a request to the data processing device. Therefore, the data processing device performs entity classification on the segment of text data to obtain an entity classification result for the segment of text data, and feeds back the entity classification result to the user equipment.

For example, the user equipment may receive a segment of text data (the text data is a Chinese text) input by the user, and then initiate a request to the data processing device. Therefore, the data processing device translates the segment of text data into English to obtain an English translated text for the segment of text data, and feeds back the English translated text to the user equipment.

In FIG. 2, the data processing device may process the text data by using a data processing method in embodiments of this application.

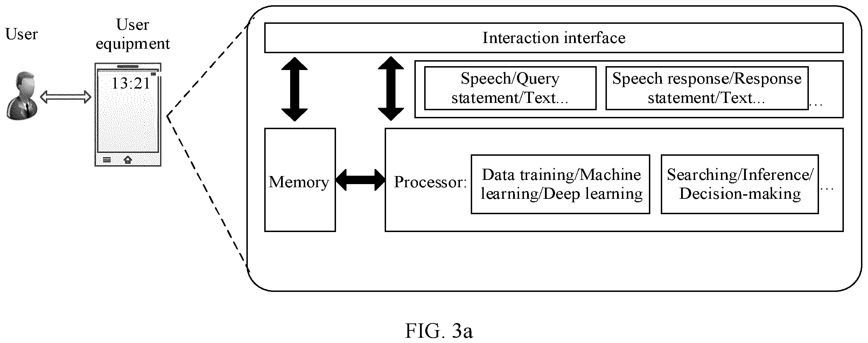

FIG. 3a shows another natural language processing system. In FIG. 3a, user equipment directly serves as a data processing device. The user equipment can directly receive input from a user. The input is directly processed by using hardware of the user equipment. A specific process is similar to that in FIG. 2. Refer to the foregoing description. Details are not described herein again.

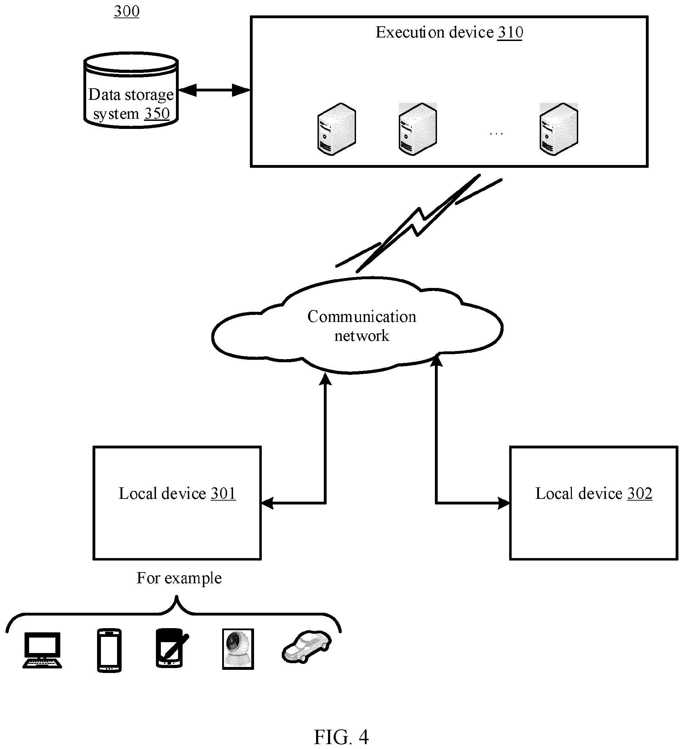

FIG. 4 is a schematic diagram of a device 300 related to natural language processing according to an embodiment of this application.

The user equipment in FIG. 2 and FIG. 3a may be specifically a local device 301 or a local device 302 in FIG. 4. The data processing device in FIG. 2 may be specifically an execution device 310 in FIG. 4. A data storage system 350 may store to-be-processed data of the execution device 310. The data storage system 350 may be integrated into the execution device 310, or may be disposed on a cloud or another network server.

The processor in FIG. 2 and FIG. 3a may perform data training/machine learning/deep learning by using a neural network model or another model, and execute a natural language processing application (for example, natural language generation, text classification, sequence annotation, reading comprehension, text generation, text inference, and translation) for text data (for example, target data described in embodiments of this application) by using a model (for example, a target encoder, a target prediction network, or a task network in embodiments of this application) obtained through final training or learning based on data, to obtain a corresponding processing result (for example, a first to-be-predicted data unit, a second to-be-predicted data unit, and a task processing result in embodiments of this application).

It should be understood that this embodiment of this application may be further applied to the image processing field and the audio/video processing field, and the data processing device processes the target data by using the data processing method in embodiments of this application.

It should be understood that the data processing device may also be referred to as a data processing apparatus, an execution device, a server, a terminal device, or the like in subsequent embodiments.

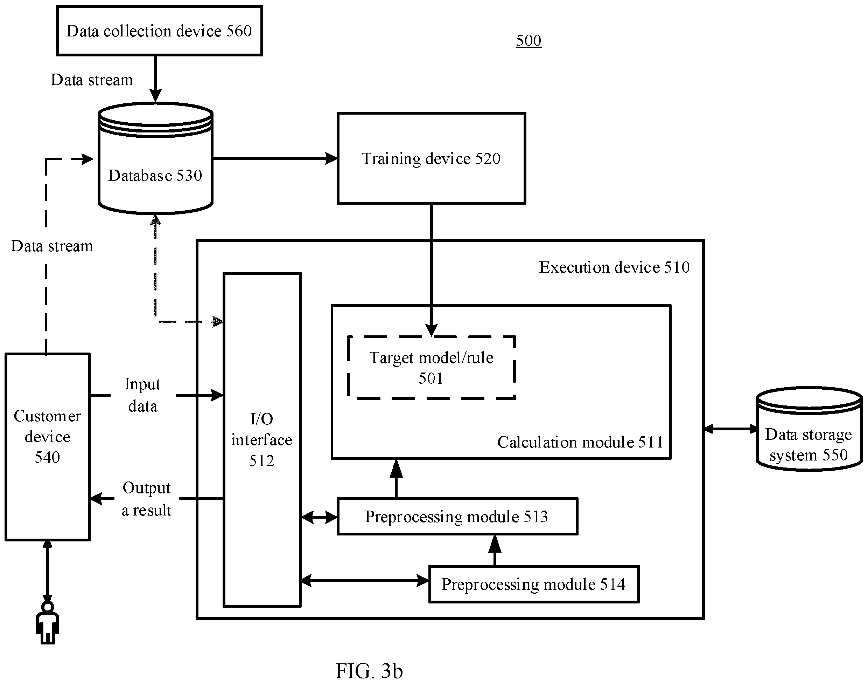

The following describes in detail a system architecture provided in an embodiment of this application with reference to FIG. 3b. FIG. 3b is a schematic diagram of a system architecture according to an embodiment of this application. As shown in FIG. 3b, the system architecture 500 includes an execution device 510, a training device 520, a database 530, a customer device 540, a data storage system 550, and a data collection system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The data collection device 560 is configured to collect training data. In a natural language synthesis task, the training data may be text data with a missing text and complete text data corresponding to the text data with the missing text. In an audio synthesis task, the training data may be speech data with a missing audio sequence and complete speech data corresponding to the speech data with the missing audio sequence. In an image synthesis (or referred to as image reconstruction) task, the training data may be image data or video data with a missing pixel and complete image data or video data corresponding to the image data or video data with the missing pixel. After collecting the training data, the data collection device 560 stores the training data in the database 530. The training device 520 obtains a target model/rule 501 through training based on the training data maintained in the database 530.

For example, the target model/rule 501 is used to implement the natural language synthesis task. In this case, the target model/rule 501 (for example, a target encoder or a target prediction network in embodiments of this application) can be used to implement the natural language synthesis task. To be specific, the text data with the missing text is input to the target model/rule 501, to obtain the missing text (for example, a first to-be-predicted data unit and a second to-be-predicted data unit in embodiments of this application).

For example, the target model/rule 501 is used to implement a target processing task (for example, short text classification, long text classification, natural language inference, text similarity matching, and text emotion classification). In this case, the target model/rule 501 (for example, the target encoder and the task network in embodiments of this application) can be used to implement the target processing task. To be specific, target data is input to the target model/rule 501, to obtain a task processing result.

It should be noted that, during actual application, the training data maintained in the database 530 is not necessarily collected by the data collection device 560, and may also be received from another device. It should further be noted that the training device 520 may not necessarily train the target model/rule 501 completely based on the training data maintained in the database 530, and may obtain training data from a cloud or another place to perform model training. The foregoing description should not be construed as a limitation on embodiments of this application.

The target model/rule 501 obtained through training by the training device 520 may be applied to different systems or devices, for example, the execution device 510 shown in FIG. 3b. The execution device 510 may be a terminal, for example, a mobile phone terminal, a tablet computer, a notebook computer, an augmented reality (augmented reality, AR) device/a virtual reality (virtual reality, VR) device, or a vehicle-mounted terminal; or may be a server, a cloud, or the like. In FIG. 3b, the execution device 510 configures an input/output (input/output, I/O) interface 512, and is configured to exchange data with an external device. A user may input data (for example, the target data in embodiments of this application) to the I/O interface 512 through the customer device 540.

The preprocessing module 513 and the preprocessing module 514 are configured to perform preprocessing based on the input data received by the I/O interface 512 (for example, a preprocessing process such as obtaining positions of a known data unit and a to-be-predicted data unit in the target data, or generating attention information). It should be understood that the preprocessing module 513 and the preprocessing module 514 may not exist, or there is only one preprocessing module. If the preprocessing module 513 and the preprocessing module 514 do not exist, the computing module 511 may be directly used to process the input data.

In a process in which the execution device 510 preprocesses the input data, or the computing module 511 of the execution device 510 performs processing related to computing or the like, the execution device 510 may invoke data, code, and the like in the data storage system 550 for corresponding processing, and may further store, in the data storage system 550, data, instructions, and the like that are obtained through the corresponding processing.

Finally, the I/O interface 512 presents, to the customer device 540, a processing result, for example, a missing text, a missing audio sequence, or a missing pixel (for example, the first to-be-predicted data unit, the second to-be-predicted data unit, and the task processing result in embodiments of this application) obtained through the processing, to provide the processing result to the user.

In a case shown in FIG. 3b, the user may manually provide input data, and the "manually providing the input data" may be implemented on an interface provided by the I/O interface 512. In another case, the customer device 540 may automatically send input data to the I/O interface 512. If the customer device 540 needs to obtain authorization from the user to automatically send the input data, the user may set corresponding permission in the customer device 540. The user may view, on the customer device 540, a result output by the execution device 510. The result may be specifically presented in a specific manner, for example, display, sound, or an action. The customer device 540 may also serve as a data collector, to collect, as new sample data, the input data that is input into the I/O interface 512 and the output result that is output from the I/O interface 512 that are shown in the figure and store the new sample data into the database 530. Certainly, alternatively, the customer device 540 may not perform collection. Instead, the I/O interface 512 directly uses, as new sample data, the input data that is input into the I/O interface 512 and the output result that is output from the I/O interface 512 that are shown in the figure, and stores the new sample data into the database 530.

It should be noted that FIG. 3b is merely a schematic diagram of a system architecture according to an embodiment of this application. A position relationship between a device, a component, a module, and the like shown in the figure constitutes no limitation. For example, in FIG. 3b, the data storage system 550 is an external memory relative to the execution device 510. In another case, the data storage system 550 may be alternatively disposed in the execution device 510.

It should be understood that the execution device 510 may be alternatively deployed in the customer device 540.

From a perspective of model inference, in this embodiment of this application, the data storage system 550 may store related code for implementing the data processing method in embodiments of this application, and the computing module 511 may obtain, from the data storage system 550, the related code for implementing the data processing method in embodiments of this application, to perform the data processing method in embodiments of this application.

In this embodiment of this application, the computing module 511 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the computing module 511 may be a hardware system having an instruction execution function, for example, a CPU or a DSP; or a hardware system having no instruction execution function, for example, an ASIC or an FPGA; or a combination of the foregoing hardware system having no instruction execution function and the foregoing hardware system having the instruction execution function.

Specifically, the computing module 511 may be the hardware system having the instruction execution function. The data processing method provided in embodiments of this application may be software code stored in the data storage system 550. The computing module 511 may obtain the software code from the data storage system 550, and execute the obtained software code to implement the data processing method provided in embodiments of this application.

It should be understood that the computing module 511 may be the combination of the hardware system having no instruction execution function and the hardware system having the instruction execution function. Some steps of the data processing method provided in embodiments of this application may be alternatively implemented by using the hardware system having no instruction execution function in the computing module 511, or by using the preprocessing module 513 or the preprocessing module 514. This is not limited herein.

Because embodiments of this application relate to massive application of a neural network, for ease of understanding, the following first describes terms related to embodiments of this application and concepts related to the neural network and the like.

(1) Neural network

The neural network may include neurons. The neuron may be an operation unit that uses xs (namely, input data) and an intercept of 1 as input. Output of the operation unit may be as follows:

$$h_{W,b}(x) = f(W^T x) = f(\sum_{s=1}^{n} W_s x_s + b)$$

s=1, 2, ..., n; n is a natural number greater than 1; Ws is a weight of xs; and b is a bias of the neuron. f indicates an activation function (activation function) of the neuron. The activation function is used for introducing a non-linear feature into the neural network, to convert an input signal in the neuron into an output signal. The output signal of the activation function may be used as input of a next convolutional layer. The activation function may be a sigmoid function. The neural network is a network formed by connecting a plurality of single neurons together. To be specific, output of a neuron may be input of another neuron. Input of each neuron may be connected to a local receptive field of a previous layer to extract a feature of the local receptive field. The local receptive field may be a region including several neurons.

(2) Transformer layer

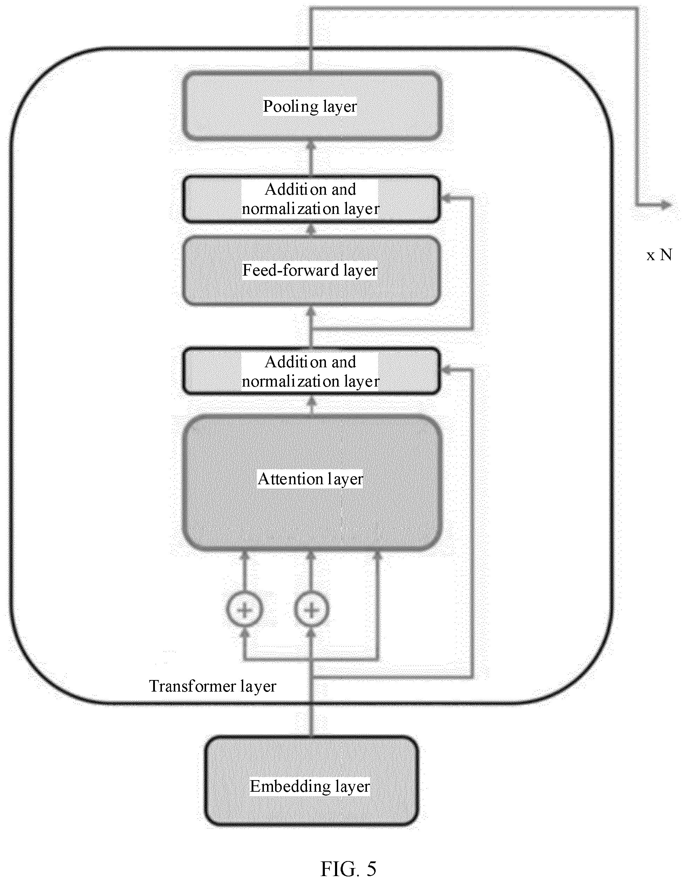

FIG. 5 is a schematic diagram of an architecture of a transformer layer. As shown in FIG. 5, a neural network includes an embedding layer and at least one transformer layer. The at least one transformer layer may be N transformer layers (N is an integer greater than 0). Each transformer layer includes an attention layer, an addition and normalization (add & norm) layer, a feed-forward (feed-forward) layer, and an addition and normalization layer that are sequentially adjacent. At the embedding layer, embedding processing is performed on current input to obtain a plurality of embedding vectors. At the attention layer, P input vectors are obtained from a previous layer of the first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At a pooling layer, the P intermediate vectors are combined into Q output vectors. A plurality of output vectors obtained from a last transformer layer of the transformer layer are used as feature representations of the current input.

(3) Attention mechanism (attention mechanism)

The attention mechanism simulates an internal process of biological observation behavior, and is a mechanism that aligns internal experience with external feeling to increase observation precision of some regions. The mechanism can quickly select highly valuable information from a large amount of information by using limited attention resources. The attention mechanism is widely used in natural language processing tasks, especially machine translation, because the attention mechanism can quickly extract an important feature of sparse data. A self-attention mechanism (self-attention mechanism) is an improvement of the attention mechanism. The self-attention mechanism becomes less dependent on external information and is better at capturing an internal correlation of data or features. An essential idea of the attention mechanism can be expressed by using the following formula:

Lx=||Source|| represents a length of a source. A meaning of the formula is that a constituent element in the source is considered to constitute a series of data pairs. In this case, an element Query in a target Target is given; similarity or a correlation between Query and each key is calculated, to obtain a weight coefficient of a value corresponding to each key; and then weighted summation is performed on values, to obtain a final attention value. Therefore, essentially, the attention mechanism is to perform weighted summation on values Values of the elements in the source. Query and the key are used to calculate a weight coefficient of a corresponding value. Conceptually, the attention mechanism may be understood as a mechanism for selecting a small amount of important information from a large amount of information, and focusing on the important information and ignoring most unimportant information. A focusing process is reflected in calculation of a weight coefficient. A larger weight indicates that a value Value corresponding to the weight is more focused on. In other words, the weight indicates importance of information, and the value indicates information corresponding to the value. The self-attention mechanism may be understood as an intra-attention (intra-attention) mechanism. The attention mechanism is used between the element Query in the target and each element in the source. The self-attention mechanism indicates an attention mechanism used between elements in the source or between elements in the target, and may also be understood as an attention calculation mechanism in a special case in which Target=Source. A specific calculation process of the self-attention mechanism is the same except that a calculation object changes.

(4) Natural language processing (natural language processing, NLP)

A natural language (natural language) is a human language. Natural language processing (NLP) is processing for the human language. Natural language processing is a process of performing systematic analysis, understanding, and information extraction on text data in an intelligent and efficient manner. By using NLP and components of NLP, large chunks of text data can be managed or a large quantity of automated tasks can be performed, and various problems can be resolved, for example, automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), a question answering (question answering) system, and topic segmentation.

(5) Pre-trained language model (pre-trained language model)

The pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of an unsupervised text to learn a word representation. At a fine tuning (fine tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

(6) Autoregressive language model (autoregressive language model)

The autoregressive language model is a model that can predict, based on a given context (for example, "a mobile phone is very"), a next word (for example, "good") that may follow. The model is usually used to predict a right-side following word when a left-side preceding text is given, and may also be used to predict a specific middle word when a left-side preceding text and a right-side following text are given.

The data processing method provided in embodiments of this application is first described by using a model inference stage as an example.

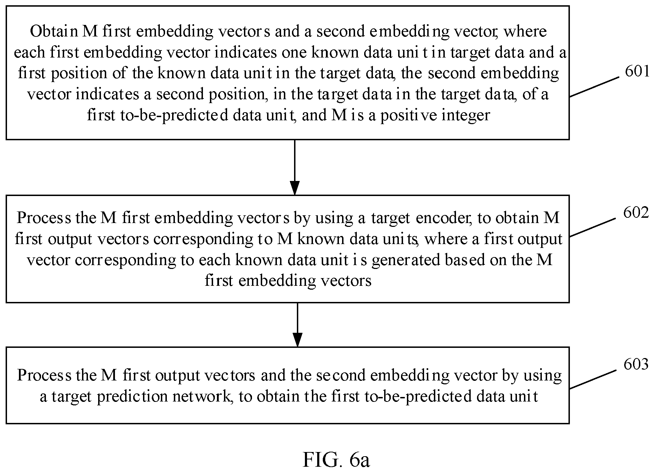

FIG. 6a is a schematic diagram of an embodiment of a data processing method according to an embodiment of this application. The data processing method provided in this embodiment of this application may be applied to the foregoing described data processing device and execution device. Specifically, the data processing method may be applied to a terminal device such as a mobile phone, a tablet, a notebook computer, or an intelligent wearable device; or to a server on a cloud side. As shown in FIG. 6a, the data processing method provided in this embodiment of this application includes the following steps.

601: Obtain M first embedding vectors and a second embedding vector, where each first embedding vector indicates one known data unit in target data and a first position of the known data unit in the target data, the second embedding vector indicates a second position, in the target data, of a first to-be-predicted data unit in the target data, and M is a positive integer.

The target data is data with missing data. The target data includes non-missing data (referred to as a known data unit in this embodiment of this application) and missing data (referred to as a to-be-predicted data unit in this embodiment of this application, for example, a first to-be-predicted data unit and a second to-be-predicted data unit). The known data unit is a data unit in the non-missing data. For example, the target data may be text data. In this case, the known data unit in the target data may be a known word or a known letter in the text data, and the to-be-predicted data unit may be a to-be-predicted word or a to-be-predicted letter in the text data. For example, the target data may be speech data. In this case, the known data unit in the target data may be a known audio sequence in the speech data, and the to-be-predicted data unit may be a to-be-predicted audio sequence in the speech data. For example, the target data may be image data. In this case, the known data unit in the target data may be a known sample in the speech data, and the to-be-predicted data unit may be a to-be-predicted sample in the speech data. It should be understood that data granularities of the known data unit and the to-be-predicted data unit are related to a type of the target data. The data granularities of the known data unit and the to-be-predicted data unit may be a minimum data unit in the target data or a plurality of data units including minimum data units. The granularities of the known data unit and the to-be-predicted data unit are not limited herein.

Specifically, in this embodiment of this application, the target data may include the M known data units and the at least one to-be-predicted data unit (including the first to-be-predicted data unit). The to-be-predicted data unit is invisible data in the target data, and the to-be-predicted data unit needs to be determined based on the M known data units.

For example, the target data is text data. In this embodiment of this application, the text data may include M known words and at least one to-be-predicted word (including a first to-be-predicted word). The text data may be a Chinese text, or may be an English text, or may be a text in another language. The text data may be a sentence, a paragraph, a chapter, or the like.

For example, the target data may be "_ _ sat on the mat". "sat", "on", "the", and "mat" are known data units, and "_" and "_" are invisible in the target data and are to-be-predicted data units. It should be understood that the symbol "_" herein means empty rather than an underline.

In this embodiment of this application, the M first embedding vectors may be obtained. Each first embedding vector indicates one known data unit in target data and a first position of the known data unit in the target data.

The following first describes how to generate the M first embedding vectors.

In an implementation, embedding processing may be performed on the M known data units in the target data by using an embedding layer, to obtain M third embedding vectors.

The embedding layer may be referred to as an input embedding (input embedding) layer. Current input may be the M known data units. After obtaining the current input, the embedding layer may perform embedding processing on the various known data units in the current input, to obtain the embedding vectors (that is, the third embedding vectors) corresponding to the various known data units.

In some embodiments, a position vector of each of the M known data units may be further obtained. The position vector indicates the first position. The first position indicates a position of the known data unit in the target data. Specifically, the first position indicates a relative position relationship between the known data unit and another known data unit and between the known data unit and the first to-be-predicted data unit.

In an implementation, the embedding layer may include the input embedding layer and a positional encoding (positional encoding) layer. At the input embedding layer, word embedding processing may be performed on each known data unit in the current input, to obtain the third embedding vector of each known data unit. At the positional encoding layer, the position of each known data unit in the current input may be obtained, to generate the position vector for the position of each known data unit.

In some examples, the first position of each known data unit in the target data may be an absolute position of each known data unit in the target data. For example, the current input is "what date should the Ant Credit Pay be paid back". A position of "what" may be represented as a first position, a position of "date" may be represented as a second position, and the like. In some examples, the first position of each known data unit in the target data may be a relative position of each known data unit in the target data. Still in the example in which the current input is "what date should the Ant Credit Pay be paid back", the position of "what" may be represented as before "date", and the position of "date" may be represented as after "what" and before "should", and the like. When the third embedding vector and the position vector of each known data unit in the current input are obtained, the position vector and the corresponding third embedding vector of each known data unit may be integrated to obtain the first embedding vector of each known data unit. In this way, the plurality of first embedding vectors corresponding to the current input are obtained. It should be understood that an integration manner may be performing an addition operation on the third embedding vector and the position vector, or performing another operation so that the first embedding vector carries a known data unit in the target data and information about a first position of the known data unit in the target data. A specific integration manner is not limited herein. The plurality of first embedding vectors may be represented as an embedding matrix having a preset dimension. It may be set that a quantity of the plurality of first embedding vectors is M, and the preset dimension is H dimensions. In this case, the plurality of first embedding vectors may be represented as an M×H embedding matrix.

In this embodiment of this application, the second embedding vector may be obtained. The second embedding vector indicates the second position, in the target data, of the first to-be-predicted data unit in the target data. The second position may indicate the relative position relationship between the first to-be-predicted data unit and each known data unit in the target data.

The following describes how to generate the second embedding vector.

In an implementation, embedding processing may be performed on the second position of the first to-be-predicted data unit in the target data by using the embedding layer, to obtain the second embedding vector for representing the second position, in the target data, of the first to-be-predicted data unit in the target data. The second embedding vector may be used as input of a subsequent target prediction network. The second position indicating the relative position relationship between the first to-be-predicted data unit and each known data unit in the target data. For description of the second position, refer to the description of the first position in the foregoing embodiment. Similarities are not described herein again.

Further, the M first embedding vectors for the M known data units and the second embedding vector for the first to-be-predicted data unit may be obtained.

602: Process the M first embedding vectors by using a target encoder, to obtain M first output vectors corresponding to M known data units, where a first output vector corresponding to each known data unit is generated based on the M first embedding vectors.

In this embodiment of this application, the target encoder may process the M first embedding vectors to obtain the M first output vectors corresponding to the M known data units, that is, may obtain one first output vector corresponding to each known data unit.

In an existing natural language generation model (with reference to FIG. 6b), an autoencoder model and an autoregressive language model are converged. Compared with the autoencoder model and the autoregressive language model, a quantity of hidden states is doubled in this model. A white part corresponds to the autoencoder model, and a gray part corresponds to the autoregressive language model. A latent variable related to the autoencoder model indicates position information. The autoregressive model is used to provide context information for prediction of the autoencoder language model. A computation amount and memory consumption of this model are twice as much as those of each of the autoencoder model and the autoregressive model.

In this embodiment of this application, in a process in which the target encoder processes the M first embedding vectors, a quantity of hidden states is consistent with a quantity of hidden states in each of the autoencoder language model and the autoregressive language model. Specifically, for the M first embedding vectors corresponding to the M known data units, the target encoder may use the M first embedding vectors as input. The first embedding vectors include position information and data information of the known data units. M pieces of additional position information do not need to be separately set as the input of the target encoder, and a quantity of latent variables of intermediate output of the target encoder is also consistent with a quantity of input embedding vectors, thereby reducing a computation amount and memory consumption of the target encoder.

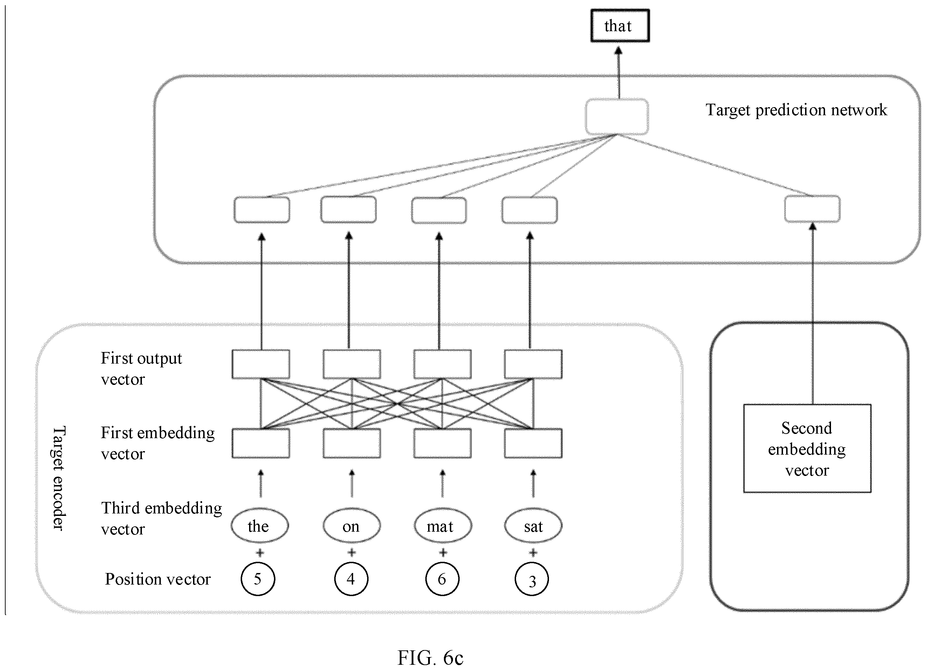

For details, refer to FIG. 6c. The input of the target encoder is the M first embedding vectors, and the output is the M first output vectors.

In this embodiment of this application, each first output vector is obtained based on the M first embedding vectors.

Each first output vector is obtained based on the M first embedding vectors. It may be understood that each first output vector may use the M first embedding vectors as a reference. In other words, when each first output vector is generated, each first embedding vector is visible, or each first output vector has a dependency relationship with the M first embedding vectors.

In an implementation, the target encoder may be a first transformer transformer layer, and that each first output vector is obtained based on the M first embedding vectors may be understood as that there is an attention association between any two of the M first embedding vectors.

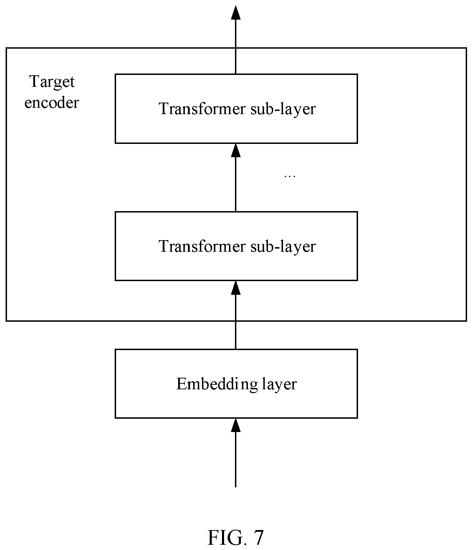

With reference to FIG. 7, the first transformer layer may include a plurality of serial transformer sub-layers. The N transformer sub-layers include a first transformer sub-layer and a second transformer sub-layer that are adjacent to each other. In other words, the first transformer sub-layer and the second transformer sub-layer may be any two adjacent transformer sub-layers in the first transformer layer.

Data output by a previous transformer sub-layer adjacent to each transformer sub-layer may be processed by using the transformer sub-layer, to obtain M intermediate vectors. The M intermediate vectors are output to a next transformer sub-layer adjacent to the transformer sub-layer. If the transformer sub-layer is a transformer layer closest to an input side in the plurality of transformer sub-layers, input data of the transformer sub-layer is the M first embedding vectors. If the transformer sub-layer is a transformer layer closest to an output side in the plurality of transformer sub-layers, output data of the transformer sub-layer is the M first output vectors.

In other words, input of each transformer sub-layer includes M eigenvectors corresponding to the M known data units, and output of each transformer sub-layer includes M output vectors corresponding to the M known data units. In this way, the quantity of latent variables of the intermediate output of the target encoder is also consistent with the quantity of input embedding vectors, thereby reducing the computation amount and the memory consumption of the target encoder.

In other words, input of each transformer sub-layer includes M eigenvectors corresponding to the M known data units, and output of each transformer sub-layer includes M output vectors corresponding to the M known data units. In this way, the quantity of latent variables of the intermediate output of the target encoder is also consistent with the quantity of input embedding vectors, thereby reducing the computation amount and the memory consumption of the target encoder.

A core feature of the transformer layer is a unique attention mechanism used by the transformer layer. When a natural language, for example, a sentence, is processed, a transformer model uses the attention mechanism to assign different attention coefficients to embedding vectors of various words in the sentence, to more comprehensively consider impact of a context of the sentence on the words. Specifically, the transformer layer may include a multi-head attention layer, an addition and normalization (add & norm) layer, a feed-forward (feed-forward) layer, and an addition and normalization layer that are sequentially adjacent. The attention layer is connected to the embedding layer. The M embedding vectors are obtained from the embedding layer as input vectors. The embedding vectors are synthesized based on association degrees between the M embedding vectors to obtain the M output vectors. Then, the M output vectors are output to a subsequent transformer layer. The transformer layer obtains the output of the previous layer as the input vectors, and performs an operation similar to that of the previous transformer layer.

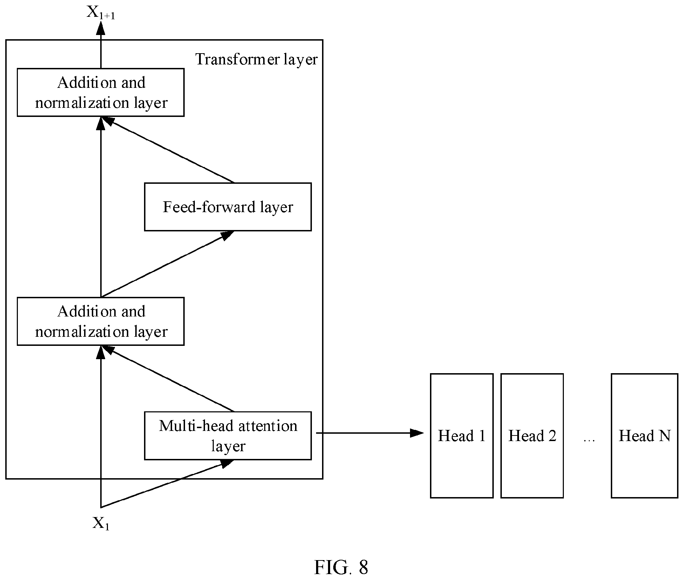

FIG. 8 is a schematic diagram of a structure of a transformer layer. For each transformer sub-layer in this embodiment of this application, refer to the structure shown in FIG. 8. As shown in FIG. 8, the transformer layer includes a multi-head attention layer, an addition and normalization (add & norm) layer, a feed-forward (feed-forward) layer, and an addition and normalization layer that are sequentially adjacent.

The multi-head attention layer obtains M input vectors $X_1$ from a previous layer of the multi-head attention layer. The M input vectors $X_1$ may also be represented as a matrix X. The vectors are transformed by using a self-attention mechanism based on an association degree between the vectors, to obtain M output vectors. The M output vectors may also be represented as a matrix Y It may be understood that, when the multi-head attention layer is a layer directly connected to the embedding layer, for example, the transformer layer directly connected to the embedding layer in FIG. 7, the input vectors obtained by the multi-head attention layer are the embedding vectors output by the embedding layer. When the multi-head attention layer is a multi-head attention layer included in the subsequent transformer layer, for example, the multi-head attention layer included in the transformer layer directly connected to the previous transformer layer in FIG. 7, the input vectors obtained by the multi-head attention layer are the output vectors of the previous transformer layer. At the multi-head attention layer, a multi-head attention (multi-head attention, MHA)-based MHA layer includes a plurality of attention heads heads (Head 1, Head 2, ..., and Head N shown in FIG. 8).

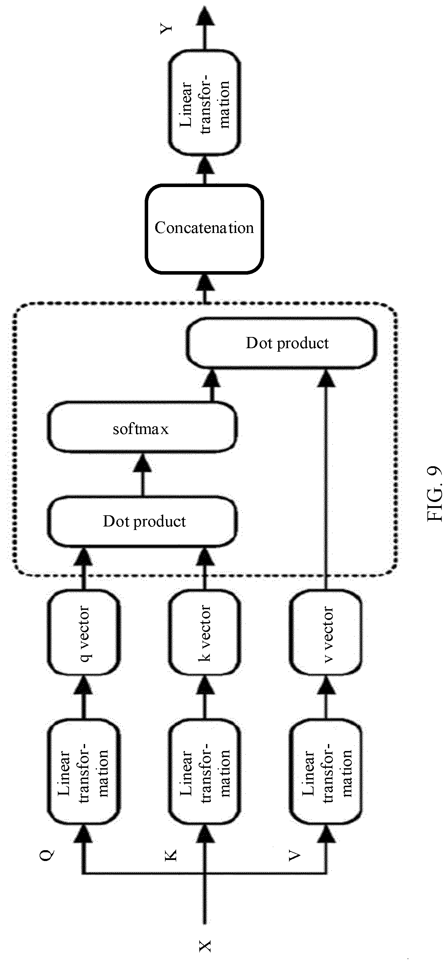

FIG. 9 is a schematic diagram of operations of an attention head head. The schematic diagram shows how the attention head head transforms the input matrix X into the output matrix Y As shown in FIG. 9, each input vector Xi in the M input vectors <X1, X2, ..., XN> is transformed separately by using a first transformation matrix Q, a second transformation matrix K, and a third transformation matrix V, to obtain a first intermediate vector (q vector), a second intermediate vector (k vector), and a third intermediate vector (v vector) that correspond to each input vector. For operations, linear transformation may be performed, separately by using the first transformation matrix Q, the second transformation matrix K, and the third transformation matrix V, on the input matrix X including the N input vectors, to separately obtain a Q matrix, a K matrix, and a V matrix of the input matrix; and then the matrices are separately split, to obtain the vector q, the vector k, and the vector v that correspond to each input vector. For any $i^{th}$ input vector Xi in the M input vectors, each association degree between the $i^{th}$ input vector Xi and each input vector Xj is determined based on a dot product operation between the first intermediate vector (q vector, qi) corresponding to the $i^{th}$ input vector and a second intermediate vector (k vector, kj) corresponding to each input vector Xj. Although a dot product result of qi and kj may be directly determined as the association degree, more typically, the dot product result is first divided by a constant, then a softmax operation is performed, and an operation result is used as the association degree between the input vectors Xi and Xj, that is,

$$\alpha_{i,j} = softmax\left(\frac{q_i \cdot k_j}{\sqrt{d_k}}\right).$$

Therefore, each association degree $\alpha i,j$ between the $i^{th}$ input vector Xi and each input vector Xj may be used as a weight factor to perform weighted combination on a third intermediate vector (v vector, vj) corresponding to each input vector Xj, thereby obtaining an $i^{th}$ combined vector Ci corresponding to the $i^{th}$ input vector Xi:

$$C_i = \sum_{j=1}^{N} \alpha_{i,j} v_j.$$

Therefore, a vector sequence <C1, C2, ..., CN> or a matrix C of M combined vectors corresponding to the M input vectors may be obtained. The M output vectors may be obtained based on the combined vector sequence. Specifically, in an embodiment, the vector sequence of the N combined vectors may be directly used as the M output vectors, that is, Yi=Ci. In this case, the output matrix Y is the combined vector matrix C, and may also be written as follows:

$$Y = softmax\left(\frac{QK^T}{\sqrt{d_k}}\right)V.$$

The foregoing describes a processing process of the attention head head. In an MHA architecture, the MHA layer maintains m sets of transformation matrices, and each set of transformation matrices includes the first transformation matrix Q, the second transformation matrix K, and the third transformation matrix V Therefore, the foregoing operations may be performed in parallel to obtain m combined vector sequences (that is, m matrices C), and each vector sequence includes N combined vectors obtained based on one set of transformation matrices. In this case, the MHA layer concatenates the obtained m combined vector sequences to obtain a concatenated matrix, and then transforms the concatenated matrix by using a fourth transformation matrix W to obtain the final output matrix Y The output matrix Y is split, that is, corresponds to the M output vectors <Y1, Y2, ..., YN>. According to the foregoing operation process, at the MHA layer, the transformation operation is performed based on the association degree between the N input vectors to obtain the M output vectors.

As shown in FIG. 8, the transformer layer may include the feed-forward layer. The feed-forward layer includes an input layer, an intermediate layer intermediate layer, and an output layer. As described above, the neural network model may include a plurality of transformer layers. In an embodiment, the plurality of transformer layers may be stacked and connected in a residual network manner.

In this embodiment of this application, the target encoder includes an attention head. Because the known data units in the target data are visible to each other, when the M first embedding vectors are processed, there is an attention association between any two of the M first embedding vectors. Specifically, attention information may be obtained. The attention information indicates that there is an attention association between any two of the M first embedding vectors when the attention head processes the M first embedding vectors. In this way, the M first embedding vectors may be processed based on the attention information by using the target encoder, so that each output vector has a dependency relationship with the M first embedding vectors.

603: Process the M first output vectors and the second embedding vector by using a target prediction network, to obtain the first to-be-predicted data unit.

In this embodiment of this application, after the M output vectors are obtained, the M output vectors may be input into the target prediction network, and the M first output vectors and the second embedding vector are processed by using the target prediction network, to obtain the first to-be-predicted data unit. The target prediction network may be a transformer layer.

The target prediction network may use the M first output vectors and the second embedding vector as input, to obtain a vector representation of the first to-be-predicted data unit. It should be understood that the first to-be-predicted data unit may be restored based on the vector representation of the first to-be-predicted data unit by using a classifier (for example, a support vector machine, a softmax classifier, or a K-nearest neighbors algorithm).

Text data is used as an example. In a data processing process of the target prediction network, a first to-be-predicted word may be obtained based on a position vector (the second embedding vector) corresponding to the first to-be-predicted word and each known word (the first embedding vector). Therefore, the target prediction network may use the M first output vectors and the second embedding vector as the input, to obtain a word vector representation of the first to-be-predicted word.

For example, it is learned that words at a position 3 to a position 6 in the target data are "sat on the mat". A target is to predict first two words in a sentence. The target prediction network may first determine, based on four input vectors corresponding to "sat on the mat" and a prediction position 1, that a word of the first to-be-predicted word is "that". Similarly, the target prediction network then predicts a word at a position 2 based on "that _ sat on the mat".

In this embodiment of this application, the target data further includes a second to-be-predicted data unit. Before the M first embedding vectors are processed by using the target encoder, a prediction order of the first to-be-predicted data unit and the second to-be-predicted data unit may be randomly determined. If the prediction order indicates that the second to-be-predicted data unit is predicted after the first to-be-predicted data unit, a fourth embedding vector and a fifth embedding vector may be obtained after the first to-be-predicted data unit is obtained. The fourth embedding vector indicates the first to-be-predicted data unit and the second position of the first to-be-predicted data unit in the target data. The fifth embedding vector indicates a third position, in the target data, of the second to-be-predicted data unit in the target data. The M first embedding vectors and the fourth embedding vector are processed by using the target encoder, to obtain the M known data units and M+1 second output vectors corresponding to the first to-be-predicted data unit. The M+1 second output vectors and the fifth embedding vector are processed by using the target prediction network, to obtain the second to-be-predicted data unit.

A second output vector corresponding to each known data unit is generated based on the M first embedding vectors. The second output vectors corresponding to the first to-be-predicted data unit are generated based on the M first embedding vectors and the fourth embedding vector.

The following uses text data as an example to describe the data processing method in this embodiment of this application with reference to a specific example.

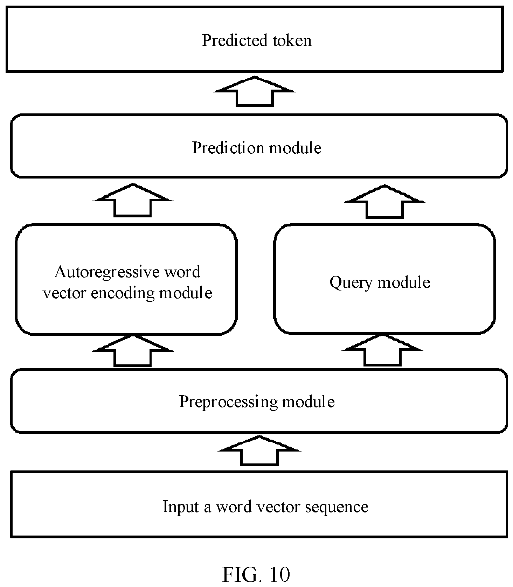

With reference to FIG. 10, a preprocessing module may process an input word vector sequence, and input a processing result to an autoregressive word vector encoding module and a query module. Output results of the autoregressive word vector encoding module and the query module may be input to a prediction module. The prediction module may output a predicted token.

The autoregressive word vector encoding module may be the target encoder in the foregoing embodiment. The query module is configured to generate the second embedding vector and the fifth embedding vector. The prediction module may be the target prediction network in the foregoing embodiment. The predicted token may be the to-be-predicted data unit in the foregoing embodiment.

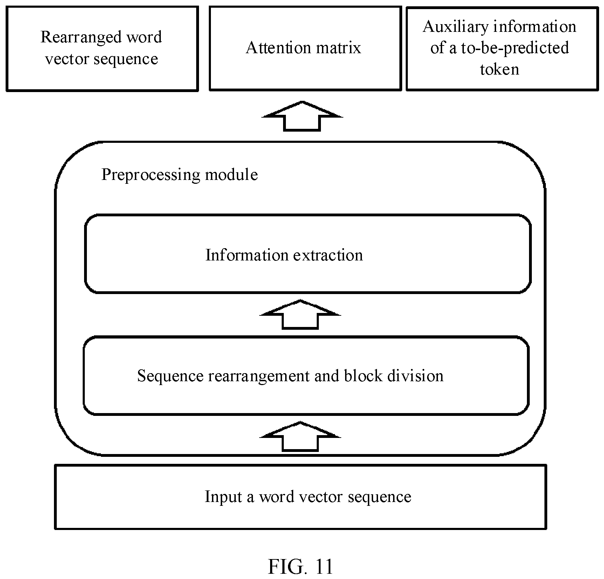

With reference to FIG. 11, the preprocessing module may perform sequence rearrangement, block division, and information extraction operations on the input word vector sequence. Sequence rearrangement is to reconstruct an order of an input word vector. A reconstruction method includes but is not limited to: keeping an original order unchanged, using a random order, and using a reverse order. Through sequence block division, a rearranged sentence is divided into two blocks. In subsequent modeling, information of each word in a first block is visible to all words, and information of each word in a second block is visible only to a word in a position following the word after the rearrangement. On the basis of sequence rearrangement, the information extraction module extracts three parts of information: respectively a rearranged word vector sequence, an attention matrix (Attention Matrix) (the matrix defines specific words whose information is visible in a sentence in a process of modeling a vector representation of each word by the autoregressive word vector encoding module, the matrix is obtained through block division, and the attention matrix may be the attention information in the foregoing embodiment), and auxiliary information of a to-be-predicted token (namely, the second embedding vector or the fifth embedding vector in the foregoing embodiment). The auxiliary information defines position information of the to-be-predicted word in the original sentence. The first two parts of information are output to the autoregressive word vector encoding module, and the third part of information is output to the query module. It should be understood that operations of the preprocessing module are manually defined, and do not include any learnable part.

The autoregressive word vector encoding module may learn context information corresponding to each word, and finally obtain, through learning for each word in a sentence, a word vector sequence (that is, the output vector in the foregoing embodiment) including the context information of the word.

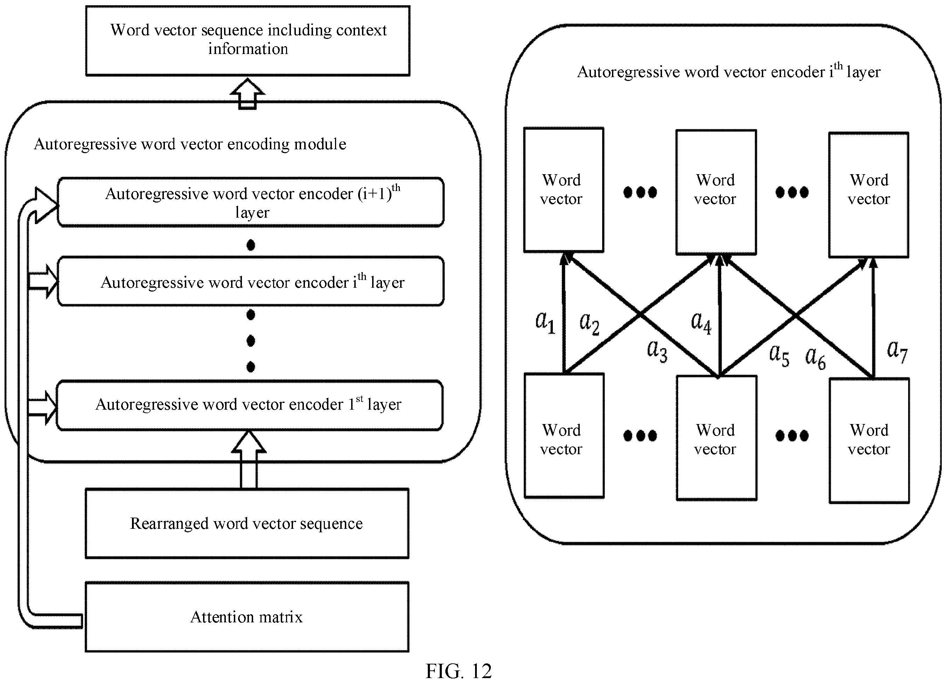

The autoregressive word vector encoding module may be shown in a left-side diagram of FIG. 12. The module includes several layers of autoregressive word vector encoders (each layer may be the transformer sub-layer in the foregoing embodiment). Each layer receives a word vector output by a previous layer, calculates dependency between word vectors, and then integrates context information of each word vector into an output word vector. A right-side diagram of FIG. 12 shows a calculation process of an $i^{th}$ layer of an autoregressive word vector encoder. In the diagram, each box represents one word vector, a lower row represents word vectors input to the layer, an upper row represents word vectors output by the layer, and each arrow ai represents dependency of each output word vector for an input word vector. Whether the dependency exists may be determined based on the attention matrix.

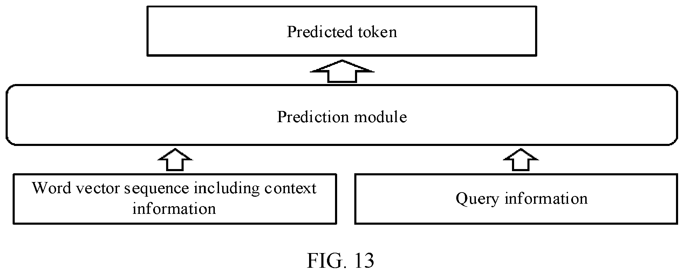

With reference to FIG. 13, after the word vector sequence including the context information and query information are obtained, the word vector sequence including the context information and the query information may be input to the prediction module. The prediction module performs prediction based on the word vector sequence including the context information and the query information, to obtain the predicted token.

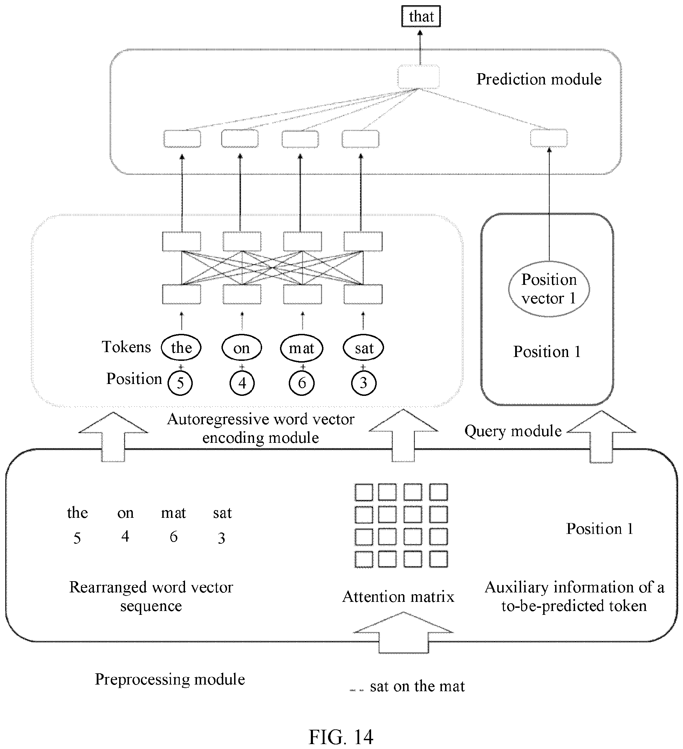

FIG. 14 shows an embodiment of a random prediction order. An original sentence is "the cat sat on the mat". The preprocessing module randomly rearranges the original sentence. A rearranged sequence is "the on mat sat the cat". The rearranged sentence is divided into blocks. A first block is "the on mat sat". Any word in the block is visible to all other words in the sentence. A second block is "the cat". Any word in the second block is visible only to a word following the block (in the rearranged sequence). The words in the second block are to be predicted in this example. Because the original sentence is randomly rearranged, a prediction order of the words in the second block is random. The module obtains an attention matrix through block division performed on the sentence. If an element in an $i^{th}$ row and a $j^{th}$ column of the matrix is 1 (white), it indicates that a $j^{th}$ word in the rearranged sequence is visible to an $i^{th}$ word in a subsequent modeling process; or otherwise, a $j^{th}$ word in the rearranged sequence is invisible to an $i^{th}$ word in a subsequent modeling process. The module outputs the rearranged word vector sequence (the M first embedding vectors) and the attention matrix (that is, the attention information in the foregoing embodiment) to the autoregressive word vector encoding module (that is, the target encoder in the foregoing embodiment); and outputs auxiliary information of a to-be-predicted token (that is, the second position indicated by the second embedding vector and the third position indicated by the fifth embedding vector in the foregoing embodiment, where in the example in FIG. 14, the auxiliary information is a position 1 and a position 2 indicating that the model predicts that words in the position 1 and the position 2 in the original sequence are respectively the and cat) to the query module. The query module may generate the second embedding vector and the fifth embedding vector.

In this embodiment of this application, prediction is performed in a random order manner. Order information of a to-be-predicted data unit is fully used, and the order information is explicitly integrated into an output vector.

It should be understood that the foregoing describes a method for predicting a to-be-predicted word by using text data as an example. The data processing method in this embodiment of this application may be further applied to a computer vision field or a speech field. Specifically, the target text may be replaced with a sequence of an image or a speech. Correspondingly, operations such as disorder and block division of the preprocessing module are performed on the sequence, to obtain a vector sequence of rearranged image or speech units and position information of a to-be-predicted position. The vector sequence and the position information are input to the autoregressive encoding module and the query module. Finally, the prediction module obtains a corresponding image or speech unit in the to-be-predicted position.

This embodiment of this application may further be presented in a form of a service or software on a cloud side. With reference to FIG. 14, the service or software may have a function of obtaining a to-be-predicted data unit based on a known data unit in target data. Specifically, the service includes but is not limited to predictive restoration of content in any position in text data (a sentence, a paragraph, a chapter, or the like), restoration for a fuzzy speech or a missing audio sequence in speech data, restoration for a fuzzy/damaged pixel in image/video data, and the like.

This embodiment of this application provides the data processing method. The method includes: obtaining the M first embedding vectors and the second embedding vector, where each first embedding vector indicates the known data unit in target data and the first position of the known data unit in the target data, the second embedding vector indicates the second position, in the target data, of the first to-be-predicted data unit in the target data, and M is a positive integer; processing the M first embedding vectors by using the target encoder, to obtain the M first output vectors corresponding to the M known data units, where the first output vector corresponding to each known data unit is generated based on the M first embedding vectors; and processing the M first output vectors and the second embedding vector by using the target prediction network, to obtain the first to-be-predicted data unit. In the foregoing manner, for the M first embedding vectors corresponding to the M known data units, the target encoder may use the M first embedding vectors as input. The first embedding vectors include position information and data information of the known data units. M pieces of additional position information do not need to be separately set as the input of the target encoder, and a quantity of latent variables of intermediate output of the target encoder is also consistent with a quantity of input embedding vectors, thereby reducing a computation amount and memory consumption of the target encoder.

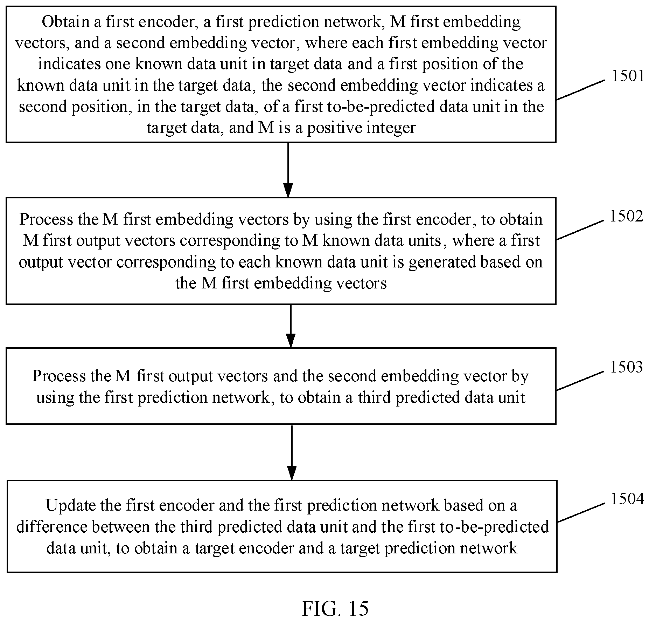

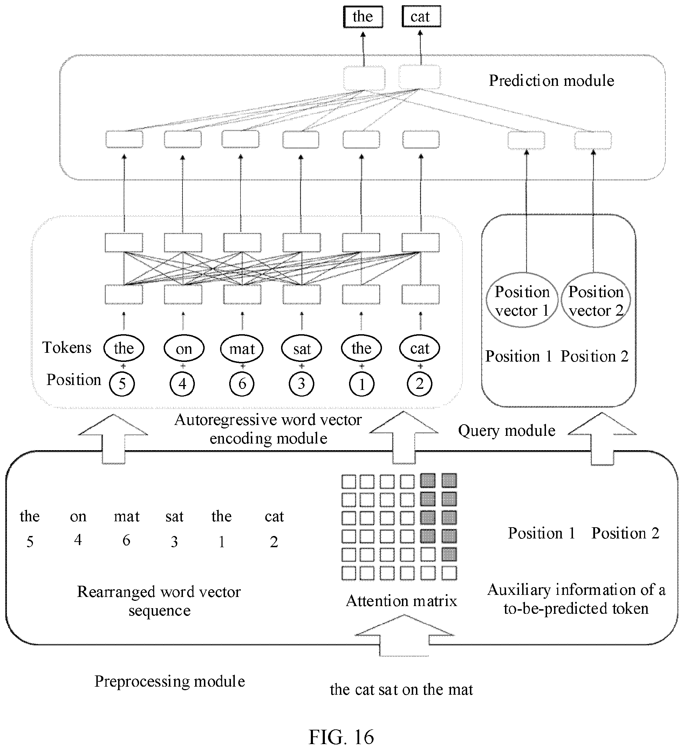

The foregoing describes a model inference process. The following describes, from a perspective of model training, the data processing method provided in embodiments of this application. FIG. 15 and FIG. 16 are schematic flowcharts of a data processing method according to an embodiment of this application. As shown in FIG. 15, the data processing method provided in this embodiment of this application includes the following steps.

1501: Obtain a first encoder, a first prediction network, M first embedding vectors, and a second embedding vector, where each first embedding vector indicates one known data unit in target data and a first position of the known data unit in the target data, the second embedding vector indicates a second position, in the target data, of a first to-be-predicted data unit in the target data, and M is a positive integer.

In this embodiment of this application, the first encoder and the first prediction network are to-be-trained neural network models.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or
the target data is image data, the known data unit is a known sample in the image data, and the first to-be-predicted data unit is a to-be-predicted sample in the image data.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the first encoder is a first transformer transformer layer, and the first prediction network is a second transformer layer.

For more description of step 1501, refer to the description of step 601. Details are not described herein again.

1502: Process the M first embedding vectors by using the first encoder, to obtain M first output vectors corresponding to M known data units, where first output vector corresponding to each known data unit is generated based on the M first embedding vectors.

In a possible implementation, the first transformer layer includes a plurality of serial transformer sub-layers. Data output by a previous transformer sub-layer adjacent to each transformer sub-layer may be processed by using the transformer sub-layer, to obtain M intermediate vectors. The M intermediate vectors are output to a next transformer sub-layer adjacent to the transformer sub-layer. If the transformer sub-layer is a transformer layer closest to an input side in the plurality of transformer sub-layers, input data of the transformer sub-layer is the M first embedding vectors. If the transformer sub-layer is a transformer layer closest to an output side in the plurality of transformer sub-layers, output data of the transformer sub-layer is the M first output vectors.

For more description of step 1502, refer to the description of step 602. Details of similarities are not described herein again.

1503: Process the M first output vectors and the second embedding vector by using the first prediction network, to obtain a third predicted data unit.

The third predicted data unit is a result of prediction performed by the first prediction network.

For more description of step 1503, refer to the description of step 603. Details of similarities are not described herein again.

1504: Update the first encoder and the first prediction network based on a difference between the third predicted data unit and the first to-be-predicted data unit, to obtain a target encoder and a target prediction network.

The third predicted data unit is the result of prediction performed by the first prediction network. Therefore, a loss needs to be constructed based on the difference between the third predicted data unit and the first to-be-predicted data unit, and the first encoder and the first prediction network are updated based on the constructed loss, to obtain the target encoder and the target prediction network. It should be understood that another network structure such as an embedding layer may also be updated based on the foregoing loss. This is not limited herein.

In a possible implementation, the target data further includes a second to-be-predicted data unit. Before the M first embedding vectors are processed by using the first encoder to obtain a first output vector corresponding to each known data unit, a prediction order of the first to-be-predicted data unit and the second to-be-predicted data unit may be randomly determined. If the prediction order indicates that the second to-be-predicted data unit is predicted after the first to-be-predicted data unit, a fourth embedding vector and a fifth embedding vector are obtained after the third predicted data unit is obtained. The fourth embedding vector indicates the first to-be-predicted data unit and the second position of the first to-be-predicted data unit in the target data. The fifth embedding vector indicates a third position, in the target data, of the second to-be-predicted data unit in the target data. The M first embedding vectors and the fourth embedding vector are processed by using the first encoder, to obtain each known data unit and second output vectors corresponding to the first to-be-predicted data unit. The M+1 second output vectors and the fifth embedding vector are processed by using the first prediction network, to obtain a fourth to-be-predicted data unit. Further, the first encoder and the first prediction network may be updated based on the difference between the third predicted data unit and the first to-be-predicted data unit and a difference between the fourth predicted data unit and the second to-be-predicted data unit, to obtain the target encoder and the target prediction network.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

For example, the target data is text data. Parameter optimization in a training stage may be performed by using a standard back propagation (back propagation) algorithm in deep learning. A loss function of this stage may be as follows:

$$L(\theta_1) = \log P(y|x; \theta_1) = \sum_{i \in S} \log p(y_i|x; \theta_1).$$

$\theta_1$ is all parameters (including a transformer parameter, a position vector parameter, and a classifier parameter) of the model, x is an entire input sequence including several elements, y represents a sequence including all words that need to be predicted (that is, an original word corresponding to each to-be-predicted position), S represents a set of positions of all words in y, and $y_i$ represents a word that needs to be predicted at an $i^{th}$ position.

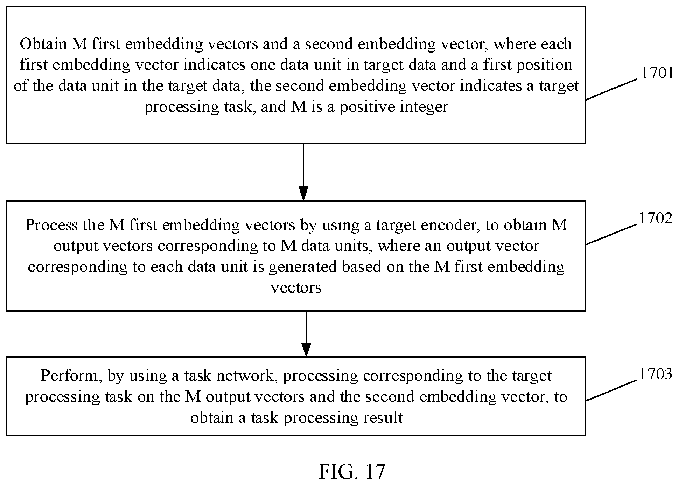

With reference to FIG. 17, an embodiment of this application further provides a data processing method. The method includes the following steps.

1701: Obtain M first embedding vectors and a second embedding vector, where each first embedding vector indicates one data unit in target data and a first position of the data unit in the target data, the second embedding vector indicates a target processing task, and M is a positive integer.

Different from the embodiment corresponding to FIG. 6a, the second embedding vector in this embodiment indicates the target processing task. The target processing task includes but is not limited to short text classification, long text classification, natural language inference, text similarity matching, emotion classification, and the like.

In a possible implementation, the first position indicates a relative position relationship between the data unit and another data unit.

In a possible implementation, the target data is text data, and the data unit is a word in the text data;

the target data is speech data, and the known data unit is an audio sequence in the speech data; or
the target data is image data, and the known data unit is a sample in the image data.

For more specific description of step 1701, refer to the description of step 601 in the foregoing embodiment. Details are not described herein again.

1702: Process the M first embedding vectors by using a target encoder, to obtain M output vectors corresponding to M data units, where an output vector corresponding to each data unit is generated based on the M first embedding vectors.

The target encoder in this embodiment of this application may be obtained by using the target encoder in the embodiment corresponding to FIG. 6a as a pre-trained model and performing fine tuning on the model for the target processing task.

In a possible implementation, the target encoder is a first transformer transformer layer.

In a possible implementation, the first transformer layer includes a plurality of serial transformer sub-layers. Data output by a previous transformer sub-layer adjacent to each transformer sub-layer may be processed by using the transformer sub-layer, to obtain M intermediate vectors. The M intermediate vectors are output to a next transformer sub-layer adjacent to the transformer sub-layer. If the transformer sub-layer is a transformer layer closest to an input side in the plurality of transformer sub-layers, input data of the transformer sub-layer is the M first embedding vectors. If the transformer sub-layer is a transformer layer closest to an output side in the plurality of transformer sub-layers, output data of the transformer sub-layer is the M output vectors.

In a possible implementation, the target encoder includes an attention head. Attention information may be obtained. The attention information indicates that there is an attention association between any two of the M first embedding vectors when the attention head processes the M first embedding vectors. The M first embedding vectors are processed based on the attention information by using the target encoder.

For more specific description of step 1702, refer to the description of step 602 in the foregoing embodiment. Details are not described herein again.

1703: Perform, by using a task network, processing corresponding to the target processing task on the M output vectors and the second embedding vector, to obtain a task processing result.

In a possible implementation, the prediction network is a second transformer layer.

The following describes the data processing method provided in this embodiment of this application by using an example in which the target processing task is a plurality of tasks: a text classification task and a reading comprehension task.

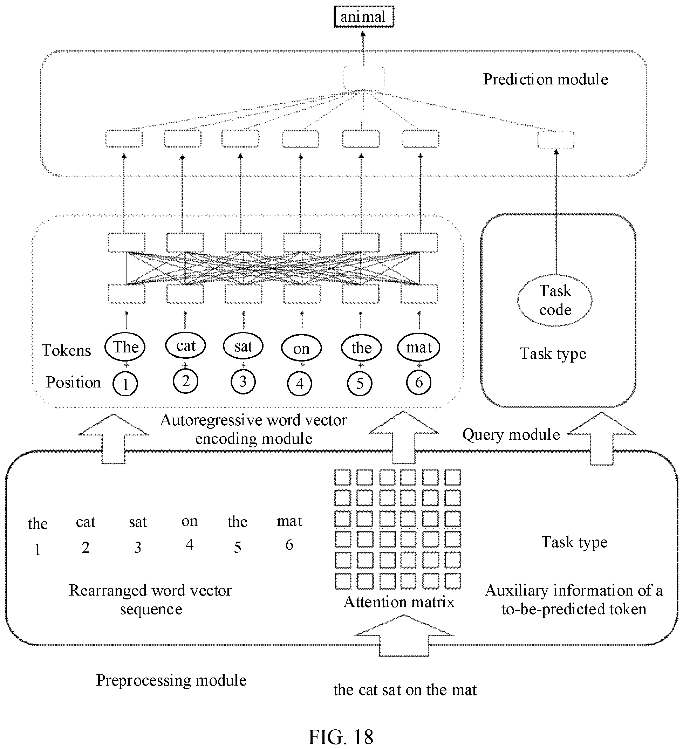

FIG. 18 shows an example of an embodiment of text emotion classification. In this example, target data is "the cat sat on the mat", and an attention matrix is obtained through block division performed on the sentence. If an element in an $i^{th}$ row and a $j^{th}$ column of the matrix is 1 (white), it indicates that a $j^{th}$ word in a rearranged sequence is visible to an $i^{th}$ word in a subsequent modeling process; or otherwise, a $j^{th}$ word in a rearranged sequence is invisible to an $i^{th}$ word in a subsequent modeling process. A module outputs the rearranged word vector sequence and the attention matrix (obtained through block division) to an autoregressive word vector encoding module, and outputs auxiliary information (a task type, for example, emotion classification) of a to-be-predicted token to a query module.

The autoregressive module may use a transformer layer as an autoregressive word vector encoder. The module adds each word vector in the rearranged word vector sequence and a position vector corresponding to the word vector (each position corresponds to one position vector, and is a part of parameters of a model). The attention matrix provided by the preprocessing module is used in the modeling process. The matrix defines whether each word is visible to another word in a process of modeling a word representation by the transformer. A solid line in FIG. 18 indicates visible. The transformer finally obtains a word vector representation that integrates context information for each word, and outputs the word vector representation to a prediction module. The query module outputs a task vector corresponding to the task type, and outputs the task vector to the prediction module. The prediction module still uses a transformer model. The model models a vector representation of the sentence. Each finally modeled word vector passes through a classifier, to predict a corresponding word.

During training in a fine tuning stage, the model predicts a token corresponding to the sentence. Parameter optimization in the fine tuning stage may be performed by using a standard back propagation (back propagation) algorithm in deep learning. A loss function of this stage may be as follows:

$$L(\theta_2) = log\, P(y|x;\theta_2).$$

$\theta_2$ is all parameters (including a transformer parameter, a position vector parameter, a task encoding parameter, and a classifier parameter) of the model, x is the entire input sequence including several elements, and y indicates the token corresponding to the sentence.

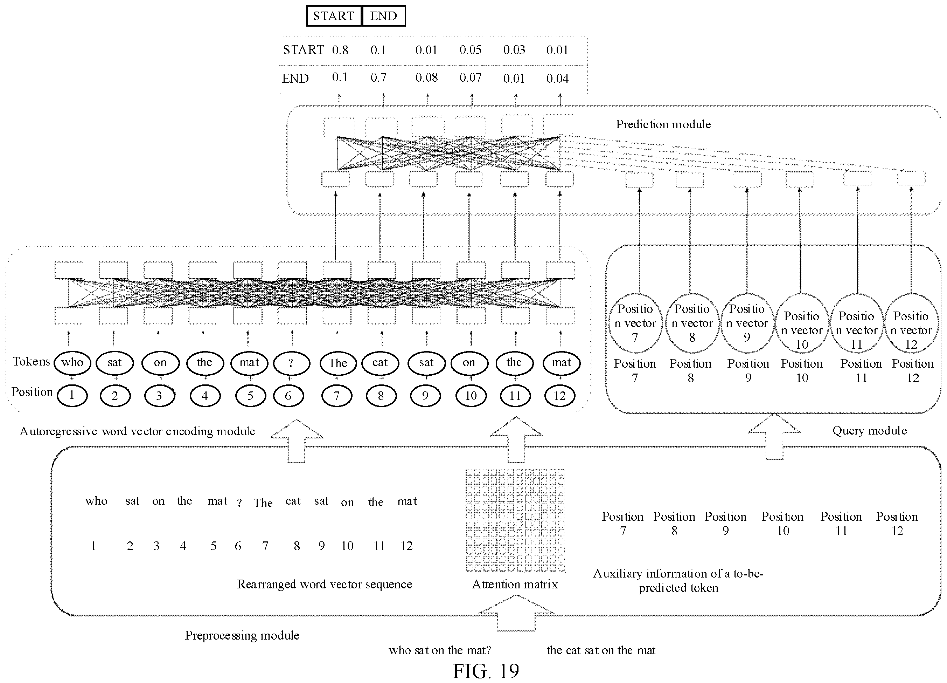

FIG. 19 shows an example of an embodiment of reading comprehension for span (span) extraction. In a reading comprehension task, a question (question) "who sat on the mat?" and a chapter (paragraph) "the cat sat on the mat" are given. The task is to find a span (span) of an answer in the chapter, that is, positions of a start (START) and an end (END) in the chapter (that is, "the" and "cat"). In this example, an attention matrix is obtained through block division performed on the sentence. If an element in an $i^{th}$ row and a $j^{th}$ column of the matrix is 1 (white), it indicates that a $j^{th}$ word in a rearranged sequence is visible to an $i^{th}$ word in a subsequent modeling process; or otherwise, a $j^{th}$ word in a rearranged sequence is invisible to an $i^{th}$ word in a subsequent modeling process. A module outputs a rearranged word vector sequence and the attention matrix (obtained through block division) to an autoregressive word vector encoding module, and outputs auxiliary information (position information of each word in the chapter) of a to-be-predicted token to a query module.

The autoregressive module may use a transformer as an autoregressive word vector encoder. The module adds each word vector in the rearranged word vector sequence and a position vector corresponding to the word vector (each position corresponds to one position vector, and is a part of parameters of a model). The attention matrix provided by the preprocessing module is used in the modeling process. The matrix defines whether each word is visible to another word in a process of modeling a word representation by the transformer. A solid line in the figure indicates visible. The transformer finally obtains a word vector representation that integrates context information for each word, and outputs the word vector representation to a prediction module. The query module outputs a task vector corresponding to a task type, and outputs the task vector to the prediction module. The prediction module still uses a transformer model. The model models a vector representation of the sentence. Each finally modeled word vector passes through two classifiers (probabilities whether each word is START and END are respectively output, as shown in a table in FIG. 19), to predict corresponding positions of START and END.

During training in a fine tuning stage, the model predicts probabilities of START and END corresponding to each word in the chapter. Parameter optimization in the fine tuning stage is performed by using a standard back propagation algorithm in deep learning. A loss function of this stage may be as follows:

$$L(\theta_3) = \log P(y_{START}|x; \theta_3) + \log P(y_{END}|x; \theta_3).$$

$\theta_3$ is all parameters of the model (including a transformer parameter, a position vector parameter, a task encoding parameter, and a classifier parameter), x is the entire input sequence including several elements, $P(y_{START}|x; \theta_3)$ indicates a probability that the model predicts a word in the START position in the answer to be START, and $P(y_{END}|x; \theta_3)$ indicates a probability that the model predicts a word in the END position in the answer to be END.

In an inference stage, the fine-tuned model may be used for prediction for a downstream task. A text classification task and a reading comprehension task are used as an example, a prediction manner of the model is the same as that in the fine tuning stage. A token of a sentence or a word is obtained by using four modules and a classifier. In the reading comprehension task, the model uses, as a word in a start position of the span, a word with a maximum START probability that is predicted by the classifier; and then uses, as a word in an end position of the span, a word with a maximum END probability after the start position.

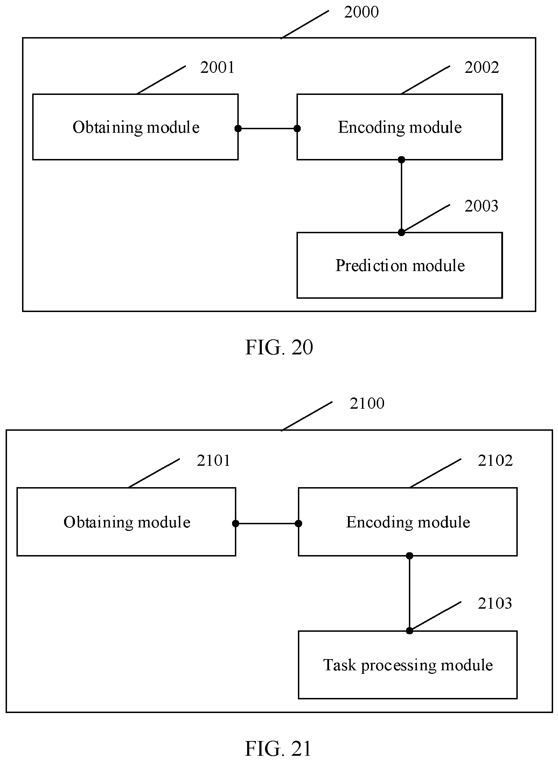

Based on the embodiments corresponding to FIG. 1 to FIG. 19, to better implement the foregoing solutions in embodiments of this application, the following further provides related devices configured to implement the foregoing solutions. Specifically, FIG. 20 is a schematic diagram of a structure of a data processing apparatus 2000 according to an embodiment of this application. The data processing apparatus 2000 may be a terminal device or a server. The data processing apparatus 2000 includes an obtaining module 2001, an encoding module 2002, and a prediction module 2003.

The obtaining module 2001 is configured to obtain M first embedding vectors and a second embedding vector. Each first embedding vector indicates one known data unit in target data and a first position of the known data unit in the target data. The second embedding vector indicates a second position, in the target data, of a first to-be-predicted data unit in the target data. M is a positive integer.

For specific description of the obtaining module 2001, refer to the description of step 601 in the foregoing embodiment. This is not described herein again.

The encoding module 2002 is configured to process the M first embedding vectors by using a target encoder, to obtain M first output vectors corresponding to M known data units. A first output vector corresponding to each known data unit is generated based on the M first embedding vectors.

For specific description of the encoding module 2002, refer to the description of step 602 in the foregoing embodiment. This is not described herein again.

The prediction module 2003 is configured to process the M first output vectors and the second embedding vector by using a target prediction network, to obtain the first to-be-predicted data unit.

For specific description of the prediction module 2003, refer to the description of step 603 in the foregoing embodiment. This is not described herein again.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the target encoder is a first transformer transformer layer, and the target prediction network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In a possible implementation, the target encoder includes an attention head, and the encoding module is configured to: obtain attention information, where the attention information indicates that there is an attention association between any two of the M first embedding vectors when the attention head processes the M first embedding vectors; and process the M first embedding vectors based on the attention information by using the target encoder.

In a possible implementation, the apparatus further includes:

an embedding module, configured to: perform embedding processing on the M known data units in the target data by using an embedding layer, to obtain M third embedding vectors;

obtain a position vector of each of the M known data units, where the position vector indicates the first position; and

integrate each of the M third embedding vectors and a corresponding position vector, to obtain the M first embedding vectors.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position of the second to-be-predicted data unit in the target data;

processing the M first embedding vectors and the fourth embedding vector by using the target encoder, to obtain the M known data units and M+1 second output vectors corresponding to the first to-be-predicted data unit; and

processing the M+1 second output vectors and the fifth embedding vector by using the target prediction network, to obtain the second to-be-predicted data unit.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or

the target data is image data, the known data unit is a known sample in the image data, and the first to-be-predicted data unit is a to-be-predicted sample in the image data.

Specifically, FIG. 21 is a schematic diagram of a structure of a data processing apparatus 2100 according to an embodiment of this application. The data processing apparatus 2100 may be a terminal device or a server. The data processing apparatus 2100 includes an obtaining module 2101, an encoding module 2102, and a task processing module 2103.

The obtaining module 2101 is configured to obtain M first embedding vectors and a second embedding vector. Each first embedding vector indicates one data unit in target data and a first position of the data unit in the target data. The second embedding vector indicates a target processing task. M is a positive integer.

For specific description of the obtaining module 2101, refer to the description of step 1701 in the foregoing embodiment. This is not described herein again.

The encoding module 2102 is configured to process the M first embedding vectors by using a target encoder, to obtain M output vectors corresponding to M data units. An output vector corresponding to each data unit is generated based on the M first embedding vectors.

For specific description of the encoding module 2102, refer to the description of step 1702 in the foregoing embodiment. This is not described herein again.

The task processing module 2103 is configured to perform, by using a task network, processing corresponding to the target processing task on the M output vectors and the second embedding vector, to obtain a task processing result.

For specific description of the task processing module 2103, refer to the description of step 1703 in the foregoing embodiment. This is not described herein again.

In a possible implementation, the first position indicates a relative position relationship between the data unit and another data unit.

In a possible implementation, the target encoder is a first transformer transformer layer, and the task network is a second transformer layer.

In a possible implementation, the first transformer layer includes a plurality of serial transformer sub-layers, and the processing the M first embedding vectors by using a target encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M output vectors.

In a possible implementation, the target encoder includes an attention head, and the encoding module is configured to: obtain attention information, where the attention information indicates that there is an attention association between any two of the M first embedding vectors when the attention head processes the M first embedding vectors; and process the M first embedding vectors based on the attention information by using the target encoder.

In a possible implementation, the target data is text data, and the data unit is a word in the text data;

the target data is speech data, and the known data unit is an audio sequence in the speech data; or
the target data is image data, and the known data unit is a sample in the image data.

In a possible implementation, the target processing task includes short text classification, long text classification, natural language inference, text similarity matching, or text emotion classification.

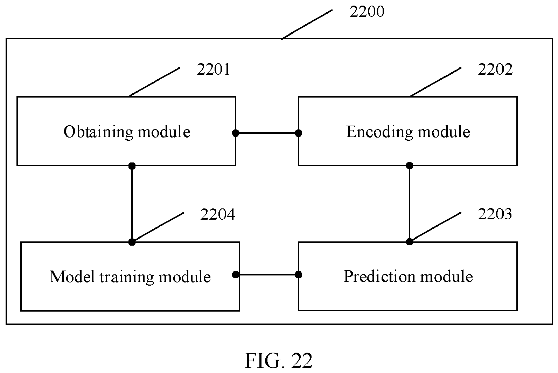

Specifically, FIG. 22 is a schematic diagram of a structure of a data processing apparatus 2200 according to an embodiment of this application. The data processing apparatus 2200 may be a terminal device or a server. The data processing apparatus 2200 includes an obtaining module 2201, an encoding module 2202, a prediction module 2203, and a model training module 2204.

The obtaining module 2201 is configured to obtain a first encoder, a first prediction network, M first embedding vectors, and a second embedding vector. Each first embedding vector indicates one known data unit in target data and a first position of the known data unit in the target data. The second embedding vector indicates a second position, in the target data, of a first to-be-predicted data unit in the target data. M is a positive integer.

For specific description of the obtaining module 2201, refer to the description of step 1501 in the foregoing embodiment. This is not described herein again.

The encoding module 2202 is configured to process the M first embedding vectors by using the first encoder, to obtain M first output vectors corresponding to M known data units. A first output vector corresponding to each known data unit is generated based on the M first embedding vectors.

For specific description of the encoding module 2202, refer to the description of step 1502 in the foregoing embodiment. This is not described herein again.

The prediction module 2203 is configured to process the M first output vectors and the second embedding vector by using the first prediction network, to obtain a third predicted data unit.

For specific description of the prediction module 2203, refer to the description of step 1503 in the foregoing embodiment. This is not described herein again.

The model training module 2204 is configured to update the first encoder and the first prediction network based on a difference between the third predicted data unit and the first to-be-predicted data unit, to obtain a target encoder and a target prediction network.

For specific description of the model training module 2204, refer to the description of step 1504 in the foregoing embodiment. This is not described herein again.

In a possible implementation, the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

In a possible implementation, the first encoder is a first transformer transformer layer, and the first prediction network is a second transformer layer.

In a possible implementation, the first transformer layer includes a plurality of serial transformer sub-layers, and the processing the M first embedding vectors by using the first encoder, to obtain M first output vectors corresponding to M known data units includes:

processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, where if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

In a possible implementation, the target data further includes a second to-be-predicted data unit, and a prediction order of the second to-be-predicted data unit and the first to-be-predicted data unit is randomly determined.

In a possible implementation, if the second to-be-predicted data unit is predicted after the first to-be-predicted data unit, the method further includes:

obtaining a fourth embedding vector and a fifth embedding vector, where the fourth embedding vector indicates the first to-be-predicted data unit and the second position of the first to-be-predicted data unit in the target data, and the fifth embedding vector indicates a third position, in the target data, of the second to-be-predicted data unit in the target data;

processing the M first embedding vectors and the fourth embedding vector by using the first encoder, to obtain the M known data units and M+1 second output vectors corresponding to the first to-be-predicted data unit; and processing the M+1 second output vectors and the fifth embedding vector by using the first prediction network, to obtain a fourth to-be-predicted data unit.

The updating the first encoder and the first prediction network based on a difference between the third predicted data unit and the first to-be-predicted data unit, to obtain a target encoder and a target prediction network includes: updating the first encoder and the first prediction network based on the difference between the third predicted data unit and the first to-be-predicted data unit and a difference between the fourth predicted data unit and the second to-be-predicted data unit, to obtain the target encoder and the target prediction network.

In a possible implementation, a second output vector corresponding to each known data unit is generated based on the M first embedding vectors, and the second output vectors corresponding to the first to-be-predicted data unit are generated based on the M first embedding vectors and the fourth embedding vector.

In a possible implementation, the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or the target data is image data, the known data unit is a known sample in the image data, and the first to-be-predicted data unit is a to-be-predicted sample in the image data.

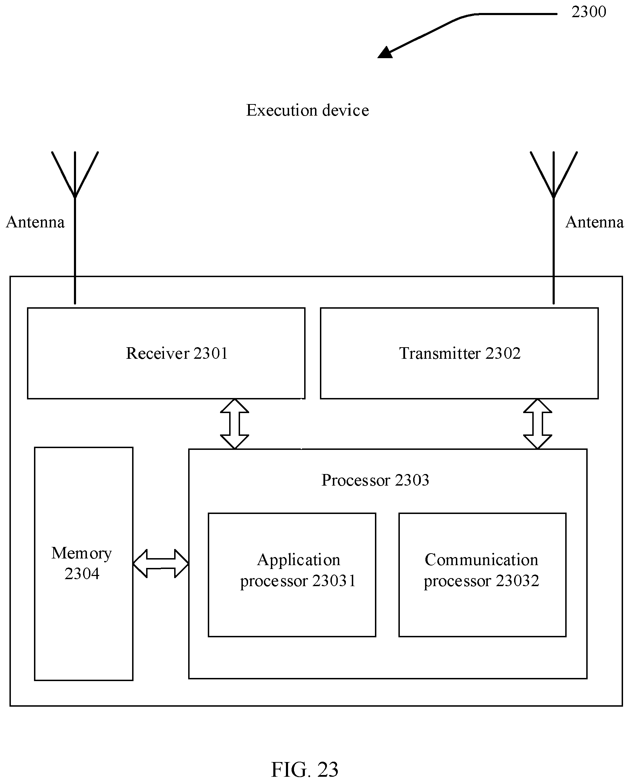

The following describes an execution device provided in an embodiment of this application. FIG. 23 is a schematic diagram of a structure of an execution device according to an embodiment of this application. The execution device 2300 may be specifically represented as a virtual reality VR device, a mobile phone, a tablet, a notebook computer, an intelligent wearable device, a monitoring data processing device, a server, or the like. This is not limited herein. Specifically, the execution device 2300 includes: a receiver 2301, a transmitter 2302, a processor 2303, and a memory 2304 (there may be one or more processors 2303 in the execution device 2300, and one processor is used as an example in FIG. 23). The processor 2303 may include an application processor 23031 and a communication processor 23032. In some embodiments of this application, the receiver 2301, the transmitter 2302, the processor 2303, and the memory 2304 may be connected through a bus or in another manner.

The memory 2304 may include a read-only memory and a random access memory, and provide instructions and data for the processor 2303. A part of the memory 2304 may further include a non-volatile random access memory (non-volatile random access memory, NVRAM). The memory 2304 stores a processor and operation instructions, an executable module or a data structure, a subnet thereof, or an expanded set thereof. The operation instructions may include various operation instructions to implement various operations.

The processor 2303 controls an operation of the execution device. In specific application, components of the execution device are coupled by using a bus system. In addition to a data bus, the bus system may further include a power bus, a control bus, a status signal bus, and the like. However, for clear description, various types of buses in the figure are all referred to as the bus system.

The methods disclosed in the foregoing embodiments of this application may be applied to the processor 2303, or may be implemented by the processor 2303. The processor 2303 may be an integrated circuit chip, and has a signal processing capability. In an implementation process, the steps in the foregoing methods may be implemented by using a hardware integrated logic circuit in the processor 2303, or by using instructions in a software form. The foregoing processor 2303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 2303 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 2304, and the processor 2303 reads information in the memory 2304 and completes the steps in the foregoing methods in combination with hardware of the processor 2303.

The receiver 2301 may be configured to: receive input digital or character information, and generate signal input related to related setting and function control of the execution device. The transmitter 2302 may be configured to output digital or character information through a first interface. The transmitter 2302 may be further configured to send instructions to a disk group through the first interface, to modify data in the disk group. The transmitter 2302 may further include a display device such as a display.

In this embodiment of this application, in a case, the processor 2303 is configured to perform the data processing method described in the embodiments corresponding to FIG. 6a and FIG. 17.

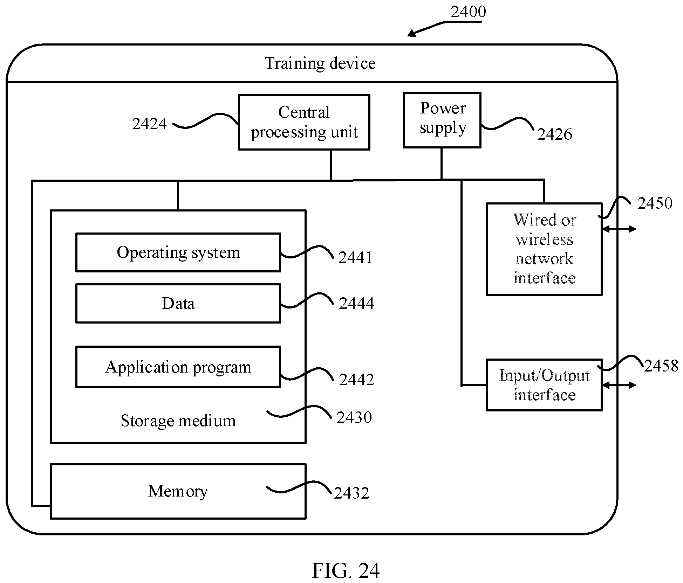

An embodiment of this application further provides a training device. FIG. 24 is a schematic diagram of a structure of a training device according to an embodiment of this application. Specifically, the training device 2400 is implemented by one or more servers. The training device 2400 may vary greatly with configuration or performance, and may include one or more central processing units (central processing unit, CPU) 2424 (for example, one or more processors), a memory 2432, and one or more storage media 2430 (for example, one or more mass storage devices) that store an application program 2442 or data 2444. The memory 2432 and the storage medium 2430 may be transitory storage or persistent storage. A program stored in the storage medium 2430 may include one or more modules (not shown in the figure), and each module may include a series of instruction operations for the training device. Further, the central processing unit 2424 may be configured to communicate with the storage medium 2430, and perform, on the training device 2400, the series of instruction operations in the storage medium 2430.

The training device 2400 may further include one or more power supplies 2426, one or more wired or wireless network interfaces 2450, one or more input/output interfaces 2458, or one or more operating systems 2441, for example, Windows ServerTM, Mac OS XTM, UnixTM, LinuxTM, or FreeB SDTM.

In this embodiment of this application, the central processing unit 2424 is configured to perform the data processing method described in the embodiment corresponding to FIG. 15.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

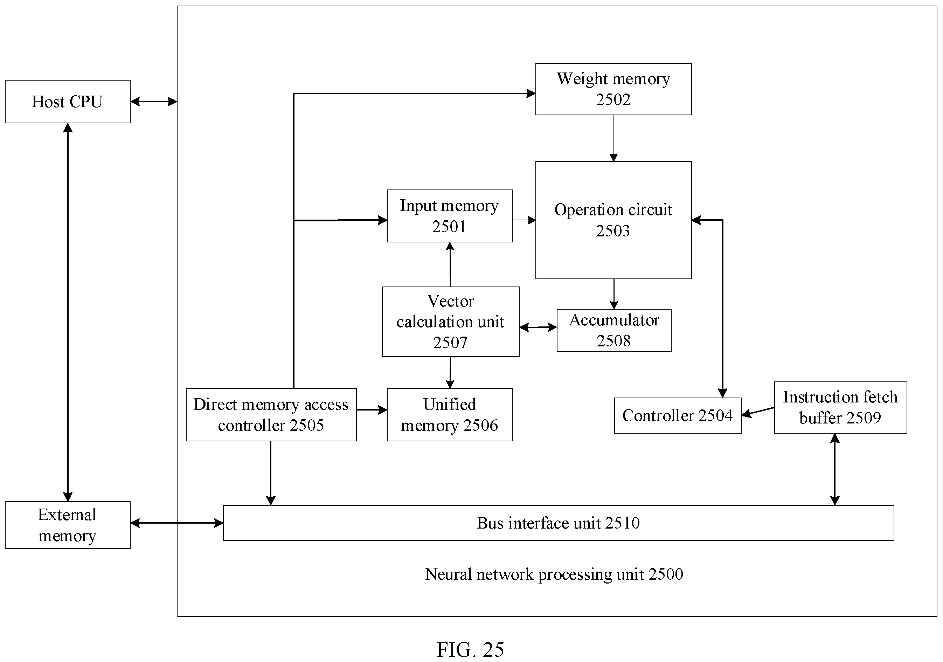

Specifically, FIG. 25 is a schematic diagram of a structure of a chip according to an embodiment of this application. The data processing methods described in the embodiments corresponding to FIG. 6a, FIG. 15, and FIG. 17 may be implemented by using the chip shown in FIG. 25. Specifically, the chip may be represented as a neural network processing unit NPU 2500. The NPU 2500 is mounted to a host CPU (Host CPU) as a coprocessor, and the host CPU allocates a task. A core part of the NPU is an operation circuit 2503, and a controller 2504 controls the operation circuit 2503 to extract data in a memory (a weight memory or an input memory) and perform an operation.

The data processing methods described in the embodiments corresponding to FIG. 6a, FIG. 15, and FIG. 17 may be jointly completed by the host CPU and the NPU in the chip shown in FIG. 25.

In some implementations, the operation circuit 2503 includes a plurality of processing engines (Processing Engine, PE) inside. In some implementations, the operation circuit 2503 is a two-dimensional systolic array. The operation circuit 2503 may be alternatively a one-dimensional systolic array or another electronic circuit that can perform mathematical operations such as multiplication and addition. In some implementations, the operation circuit 2503 is a general-purpose matrix processor.

For example, it is assumed that there is an input matrix A, a weight matrix B, and an output matrix C. The operation circuit fetches data corresponding to the matrix B from a weight memory 2502, and buffers the data on each PE in the operation circuit. The operation circuit fetches data of the matrix A from an input memory 2501 to perform a matrix operation on the matrix B, to obtain a partial result or a final result of the matrix that is then stored in an accumulator (accumulator) 2508.

A unified memory 2506 is configured to store input data and output data. Weight data is directly transferred to the weight memory 2502 through a direct memory access controller DMAC (direct memory access controller, DMAC) 2505. The input data is also transferred to the unified memory 2506 by using the DMAC.

A BIU is a bus interface unit, namely, a bus interface unit 2510, and is configured to perform interaction between an AXI bus and each of the DMAC and an instruction fetch buffer (Instruction Fetch Buffer, IFB) 2509.

A bus interface unit (Bus Interface Unit, BIU for short) 2510 is used by an instruction fetch buffer 2509 to obtain instructions from an external memory, and is further used by the direct memory access controller 2505 to obtain original data of the input matrix A or the weight matrix B from the external memory.

The DMAC is mainly configured to transfer input data in the external memory DDR to the unified memory 2506, transfer weight data to the weight memory 2502, or transfer input data to the input memory 2501.

A vector calculation unit 2507 includes a plurality of operation processing units. If required, further processing is performed on an output of the operation circuit, for example, vector multiplication, vector addition, an exponential operation, a logarithmic operation, or size comparison. The vector calculation unit 2507 is mainly configured to perform network calculation at a non-convolutional/fully connected layer in a neural network, for example, batch normalization (batch normalization), pixel-level summation, and upsampling on a feature plane.

In some implementations, the vector calculation unit 2507 can store a processed output vector in the unified memory 2506. For example, the vector calculation unit 2507 may apply a linear function or a non-linear function to the output of the operation circuit 2503, for example, perform linear interpolation on a feature plane extracted at a convolutional layer. For another example, the linear function or the non-linear function is applied to a vector of an accumulated value to generate an activation value. In some implementations, the vector calculation unit 2507 generates a normalized value, a pixel-level summation value, or both. In some implementations, the processed output vector can be used as activation input to the operation circuit 2503, for example, to be used in a subsequent layer in the neural network.

The instruction fetch buffer (instruction fetch buffer) 2509 connected to the controller 2504 is configured to store instructions used by the controller 2504.

The unified memory 2506, the input memory 2501, the weight memory 2502, and the instruction fetch buffer 2509 are all on-chip memories. The external memory is private for a hardware architecture of the NPU.

The processor mentioned anywhere above may be a general-purpose central processing unit, a microprocessor, an ASIC, or one or more integrated circuits configured to control program execution.

It should be further noted that the apparatus embodiments described above are merely examples, and units described as separate components may be or may not be physically separate. A component displayed as a unit may be or may not be a physical unit; and may be located in one place, or may be distributed in a plurality of network units. Some or all of the modules may be selected according to an actual requirement, to achieve the objectives of the solutions in embodiments. In addition, in the accompanying drawings of the apparatus embodiments provided in this application, connection relationships between modules indicate that there are communication connections between the modules, and may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A data processing method, wherein the method comprises:

   obtaining M first embedding vectors and a second embedding vector, wherein each first embedding vector indicates one known data unit in target data and a first position of the known data unit in the target data, the second embedding vector indicates a second position, in the target data, of a first to-be-predicted data unit in the target data, and M is a positive integer;
   processing the M first embedding vectors by using a target encoder, to obtain M first output vectors corresponding to M known data units, wherein a first output vector corresponding to each known data unit is generated based on the M first embedding vectors; and
   processing the M first output vectors and the second embedding vector by using a target prediction network, to obtain the first to-be-predicted data unit.

2. The method according to claim 1, wherein the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

3. The method according to claim 1 or 2, wherein the target encoder is a first transformer transformer layer, and the target prediction network is a second transformer layer.

4. The method according to claim 3, wherein the first transformer layer comprises a plurality of serial transformer sub-layers, and the processing the M first embedding vectors by using a target encoder, to obtain M first output vectors corresponding to M known data units comprises:
   processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, wherein if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

5. The method according to any one of claims 1 to 4, wherein the target encoder comprises an attention head, and the processing the M first embedding vectors by using a target encoder comprises:

   obtaining attention information, wherein the attention information indicates that there is an attention association between any two of the M first embedding vectors when the attention head processes the M first embedding vectors; and
   processing the M first embedding vectors based on the attention information by using the target encoder.

6. The method according to any one of claims 1 to 5, wherein the method further comprises:

   performing embedding processing on the M known data units in the target data by using an embedding layer, to obtain M third embedding vectors;
   obtaining a position vector of each of the M known data units, wherein the position vector indicates the first position; and
   integrating each of the M third embedding vectors and a corresponding position vector, to obtain the M first embedding vectors.

7. The method according to any one of claims 1 to 6, wherein the target data further comprises a second to-be-predicted data unit, and a prediction order of the second to-be-predicted data unit and the first to-be-predicted data unit is randomly determined.

8. The method according to claim 7, wherein if the second to-be-predicted data unit is predicted after the first to-be-predicted data unit, the method further comprises:

obtaining a fourth embedding vector and a fifth embedding vector, wherein the fourth embedding vector indicates the first to-be-predicted data unit and the second position of the first to-be-predicted data unit in the target data, and the fifth embedding vector indicates a third position of the second to-be-predicted data unit in the target data; processing the M first embedding vectors and the fourth embedding vector by using the target encoder, to obtain the M known data units and M+1 second output vectors corresponding to the first to-be-predicted data unit; and processing the M+1 second output vectors and the fifth embedding vector by using the target prediction network, to obtain the second to-be-predicted data unit.

9. The method according to claim 7 or 8, wherein a second output vector corresponding to each known data unit is generated based on the M first embedding vectors, and the second output vectors corresponding to the first to-be-predicted data unit are generated based on the M first embedding vectors and the fourth embedding vector.

10. The method according to any one of claims 1 to 9, wherein the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or the target data is image data, the known data unit is a known sample in the image data, and the first to-be-predicted data unit is a to-be-predicted sample in the image data.

11. A data processing method, wherein the method comprises:

obtaining M first embedding vectors and a second embedding vector, wherein each first embedding vector indicates one data unit in target data and a first position of the data unit in the target data, the second embedding vector indicates a target processing task, and M is a positive integer; processing the M first embedding vectors by using a target encoder, to obtain M output vectors corresponding to M data units, wherein an output vector corresponding to each data unit is generated based on the M first embedding vectors; and performing, by using a task network, processing corresponding to the target processing task on the M output vectors and the second embedding vector, to obtain a task processing result.

12. The method according to claim 11, wherein the first position indicates a relative position relationship between the data unit and another data unit.

13. The method according to claim 11 or 12, wherein the target encoder is a first transformer transformer layer, and the task network is a second transformer layer.

14. The method according to claim 13, wherein the first transformer layer comprises a plurality of serial transformer sub-layers, and the processing the M first embedding vectors by using a target encoder, to obtain M first output vectors corresponding to M known data units comprises:
processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, wherein if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M output vectors.

15. The method according to any one of claims 11 to 14, wherein the target encoder comprises an attention head, and the processing the M first embedding vectors by using a target encoder comprises:

obtaining attention information, wherein the attention information indicates that there is an attention association between any two of the M first embedding vectors when the attention head processes the M first embedding vectors; and

processing the M first embedding vectors based on the attention information by using the target encoder.

16. The method according to any one of claims 11 to 15, wherein the target data is text data, and the data unit is a word in the text data;

   the target data is speech data, and the known data unit is an audio sequence in the speech data; or
   the target data is image data, and the known data unit is a sample in the image data.

17. The method according to any one of claims 11 to 16, wherein the target processing task comprises short text classification, long text classification, natural language inference, text similarity matching, or text emotion classification.

18. A data processing method, wherein the method comprises:

   obtaining a first encoder, a first prediction network, M first embedding vectors, and a second embedding vector, wherein each first embedding vector indicates one known data unit in target data and a first position of the known data unit in the target data, the second embedding vector indicates a second position, in the target data, of a first to-be-predicted data unit in the target data, and M is a positive integer;
   processing the M first embedding vectors by using the first encoder, to obtain M first output vectors corresponding to M known data units, wherein a first output vector corresponding to each known data unit is generated based on the M first embedding vectors;
   processing the M first output vectors and the second embedding vector by using the first prediction network, to obtain a third predicted data unit; and
   updating the first encoder and the first prediction network based on a difference between the third predicted data unit and the first to-be-predicted data unit, to obtain a target encoder and a target prediction network.

19. The method according to claim 18, wherein the first position indicates a relative position relationship between the known data unit and another known data unit and a relative position relationship between the known data unit and the first to-be-predicted data unit, and the second position indicates a relative position relationship between the first to-be-predicted data unit and each known data unit in the target data.

20. The method according to claim 18 or 19, wherein the first encoder is a first transformer transformer layer, and the first prediction network is a second transformer layer.

21. The method according to claim 20, wherein the first transformer layer comprises a plurality of serial transformer sub-layers, and the processing the M first embedding vectors by using the first encoder, to obtain M first output vectors corresponding to M known data units comprises:
   processing data output by a previous transformer sub-layer adjacent to each transformer sub-layer by using the transformer sub-layer, to obtain M intermediate vectors; and outputting the M intermediate vectors to a next transformer sub-layer adjacent to the transformer sub-layer, wherein if the transformer sub-layer is a transformer layer closest to an input side in the plurality of transformer sub-layers, input data of the transformer sub-layer is the M first embedding vectors; or if the transformer sub-layer is a transformer layer closest to an output side in the plurality of transformer sub-layers, output data of the transformer sub-layer is the M first output vectors.

22. The method according to any one of claims 18 to 21, wherein the target data further comprises a second to-be-predicted data unit, and a prediction order of the second to-be-predicted data unit and the first to-be-predicted data unit is randomly determined.

23. The method according to claim 22, wherein if the second to-be-predicted data unit is predicted after the first to-be-predicted data unit, the method further comprises:

   obtaining a fourth embedding vector and a fifth embedding vector, wherein the fourth embedding vector indicates the first to-be-predicted data unit and the second position of the first to-be-predicted data unit in the target data, and the fifth embedding vector indicates a third position, in the target data, of the second to-be-predicted data unit in the target data;
   processing the M first embedding vectors and the fourth embedding vector by using the first encoder, to obtain the M known data units and M+1 second output vectors corresponding to the first to-be-predicted data unit; and
   processing the M+1 second output vectors and the fifth embedding vector by using the first prediction network, to obtain the fourth to-be-predicted data unit; and

the updating the first encoder and the first prediction network based on a difference between the third predicted data unit and the first to-be-predicted data unit, to obtain a target encoder and a target prediction network comprises:

updating the first encoder and the first prediction network based on the difference between the third predicted data unit and the first to-be-predicted data unit and a difference between the fourth predicted data unit and the second to-be-predicted data unit, to obtain the target encoder and the target prediction network.

24. The method according to claim 22 or 23, wherein a second output vector corresponding to each known data unit is generated based on the M first embedding vectors, and the second output vectors corresponding to the first to-be-predicted data unit are generated based on the M first embedding vectors and the fourth embedding vector.

25. The method according to any one of claims 18 to 24, wherein the target data is text data, the known data unit is a known word in the text data, and the first to-be-predicted data unit is a to-be-predicted word in the text data;

the target data is speech data, the known data unit is a known audio sequence in the speech data, and the first to-be-predicted data unit is a to-be-predicted audio sequence in the speech data; or
the target data is image data, the known data unit is a known sample in the image data, and the first to-be-predicted data unit is a to-be-predicted sample in the image data.

26. A data processing apparatus, wherein the apparatus comprises a memory and a processor, the memory stores code, and the processor is configured to obtain the code and perform the method according to any one of claims 1 to 25.

27. A computer storage medium, wherein the computer storage medium stores one or more instructions, and when the instructions are executed by one or more computers, the one or more computers are enabled to perform the method according to any one of claims 1 to 25.

28. A computer program product, wherein the computer program product comprises code, and when the code is executed, the steps in the method according to any one of claims 1 to 25 are implemented.

Intelligent information chain →

Intelligent product and industry application

Translation/Text analysis/...   Speech/Vision/Image/...

Data

Data processing:   Data training/Machine learning/Deep learning   Searching/Inference/Decision-making   ...

Infrastructure   Sensor   Smart chip   Basic platform   ...

IT value chain

FIG. 1

EP 4 318 322 A1

FIG. 2

FIG. 3a

500

Data storage system 550

Execution device 510

Calculation module 511

Target model/rule 501

Preprocessing module 513

Preprocessing module 514

Training device 520

I/O interface 512

Data collection device 560

Database 530

Data stream

Data stream

Input data

Output a result

Customer device 540

FIG. 3b

300

Execution device 310

Data storage
system 350

Communication
network

Local device 301

Local device 302

For example

FIG. 4

FIG. 5

Obtain M first embedding vectors and a second embedding vector, where each first embedding vector indicates one known data unit in target data and a first position of the known data unit in the target data, the second embedding vector indicates a second position, in the target data in the target data, of a first to-be-predicted data unit, and M is a positive integer

601

Process the M first embedding vectors by using a target encoder, to obtain M first output vectors corresponding to M known data units, where a first output vector corresponding to each known data unit is generated based on the M first embedding vectors

602

Process the M first output vectors and the second embedding vector by using a target prediction network, to obtain the first to-be-predicted data unit

603

FIG. 6a

FIG. 6b

FIG. 6c

Target encoder

Transformer sub-layer

...

Transformer sub-layer

Embedding layer

FIG. 7

$X_{1+1}$

Transformer layer

Addition and normalization layer

Feed-forward layer

Addition and normalization layer

Multi-head attention layer

$X_1$

Head 1 | Head 2 | ... | Head N

FIG. 8

FIG. 9

Predicted token

Prediction module

Autoregressive word vector encoding module

Query module

Preprocessing module

Input a word vector sequence

FIG. 10

| Rearranged word vector sequence | Attention matrix | Auxiliary information of a to-be-predicted token |
|---|---|---|

Preprocessing module

Information extraction

Sequence rearrangement and block division

Input a word vector sequence

FIG. 11

Word vector sequence including context information

Autoregressive word vector encoding module

Autoregressive word vector encoder $(i+1)^{th}$ layer

$\bullet$

Autoregressive word vector encoder $i^{th}$ layer

$\bullet$
$\bullet$
$\bullet$

Autoregressive word vector encoder $1^{st}$ layer

Rearranged word vector sequence

Attention matrix

Autoregressive word vector encoder $i^{th}$ layer

Word vector $\bullet\bullet\bullet$ Word vector $\bullet\bullet\bullet$ Word vector

$a_1$ $a_2$ $a_4$

$a_3$ $a_5$ $a_6$ $a_7$

Word vector $\bullet\bullet\bullet$ Word vector $\bullet\bullet\bullet$ Word vector

FIG. 12

EP 4 318 322 A1

Predicted token

Prediction module

| Word vector sequence including context information | Query information |

FIG. 13

that

Prediction module

Position
vector 1

Position 1

Tokens (the) (on) (mat) (sat)

Position (5) (4) (6) (3)

Autoregressive word vector
encoding module

Query module

the     on     mat     sat
5       4      6       3

Rearranged word vector
sequence

Attention matrix

Position 1

Auxiliary information of a
to-be-predicted token

Preprocessing module

_ _ sat on the mat

FIG. 14

Obtain a first encoder, a first prediction network, M first embedding vectors, and a second embedding vector, where each first embedding vector indicates one known data unit in target data and a first position of the known data unit in the target data, the second embedding vector indicates a second position, in the target data, of a first to-be-predicted data unit in the target data, and M is a positive integer ⟋ 1501

Process the M first embedding vectors by using the first encoder, to obtain M first output vectors corresponding to M known data units, where a first output vector corresponding to each known data unit is generated based on the M first embedding vectors ⟋ 1502

Process the M first output vectors and the second embedding vector by using the first prediction network, to obtain a third predicted data unit ⟋ 1503

Update the first encoder and the first prediction network based on a difference between the third predicted data unit and the first to-be-predicted data unit, to obtain a target encoder and a target prediction network ⟋ 1504

FIG. 15

Tokens
Position

the 5
on 4
mat 6
sat 3
the 1
cat 2

Position vector 1  Position vector 2
Position 1  Position 2

Autoregressive word vector encoding module

Query module

the    on    mat   sat   the   cat
5      4      6      3     1     2

Rearranged word vector sequence

Attention matrix

Position 1   Position 2

Auxiliary information of a to-be-predicted token

Preprocessing module

the cat sat on the mat

FIG. 16

Obtain M first embedding vectors and a second embedding vector, where each first embedding vector indicates one data unit in target data and a first position of the data unit in the target data, the second embedding vector indicates a target processing task, and M is a positive integer
— 1701

Process the M first embedding vectors by using a target encoder, to obtain M output vectors corresponding to M data units, where an output vector corresponding to each data unit is generated based on the M first embedding vectors
— 1702

Perform, by using a task network, processing corresponding to the target processing task on the M output vectors and the second embedding vector, to obtain a task processing result
— 1703

FIG. 17

FIG. 18

|       | START | END  |      |      |      |      |
|-------|-------|------|------|------|------|------|
| START | 0.8   | 0.1  | 0.01 | 0.05 | 0.03 | 0.01 |
| END   | 0.1   | 0.7  | 0.08 | 0.07 | 0.01 | 0.04 |

Prediction module

Position vector 7    Position vector 8    Position vector 9    Position vector 10    Position vector 11    Position vector 12

Position 7    Position 8    Position 9    Position 10    Position 11    Position 12

Query module

Tokens: who  sat  on  the  mat  ?  The  cat  sat  on  the  mat

Position: 1  2  3  4  5  6  7  8  9  10  11  12

Autoregressive word vector encoding module

who  sat  on  the  mat  ?  The  cat  sat  on  the  mat

1    2    3    4    5    6    7    8    9    10   11   12

Rearranged word vector sequence

Attention matrix

Position 7    Position 8    Position 9    Position 10    Position 11    Position 12

Auxiliary information of a to-be-predicted token

Preprocessing module

who sat on the mat?          the cat sat on the mat

FIG. 19

2000

Obtaining module 2001

Encoding module 2002

Prediction module 2003

FIG. 20

2100

Obtaining module 2101

Encoding module 2102

Task processing module 2103

FIG. 21

FIG. 22

2300

Execution device

Antenna

Antenna

| Receiver 2301 | Transmitter 2302 |
|---|---|

Processor 2303

| Memory 2304 | Application processor 23031 | Communication processor 23032 |
|---|---|---|

FIG. 23

2400

Training device

2424 — Central processing unit

Power supply 2426

Operating system 2441

Data 2444

Application program 2442

Storage medium 2430

Memory 2432

Wired or wireless network interface 2450

Input/Output interface 2458

FIG. 24

FIG. 25

| | INTERNATIONAL SEARCH REPORT | International application No. |
|---|---|---|
| | | **PCT/CN2022/087028** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

EPODOC, WPI, CNPAT, CNKI, IEEE, GOOGLE: 嵌入向量, 位置, 编码器, 预测, 数量, 模型, 网络, 卷积, embedding vector, position, encoder, prediction, quantity, model, network, convolution

**C. DOCUMENTS CONSIDERED TO BE RELEVANT**

| Category* | Citation of document, with indication, where appropriate, of the relevant passages | Relevant to claim No. |
|---|---|---|
| A | CN 108446374 A (BEIJING SANKUAI ONLINE TECHNOLOGY CO., LTD.) 24 August 2018 (2018-08-24) description, paragraphs [0032]-[0072] and [0116]-[0148] | 1-28 |
| A | CN 112527938 A (ANHUI DIKE SHUJIN TECHNOLOGY CO., LTD.) 19 March 2021 (2021-03-19) entire document | 1-28 |
| A | CN 111160050 A (SHENYANG YAYI NETWORK TECHNOLOGY CO., LTD.) 15 May 2020 (2020-05-15) entire document | 1-28 |
| A | CN 110489555 A (INNOVATION WORKS (GUANGZHOU) ARTIFICIAL INTELLIGENCE RESEARCH CO., LTD.) 22 November 2019 (2019-11-22) entire document | 1-28 |
| A | JP 2007028658 A (SONY CORP.) 01 February 2007 (2007-02-01) entire document | 1-28 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 June 2022** | **27 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/087028**

| Patent document cited in search report | | | Publication date (day/month/year) | Patent family member(s) | Publication date (day/month/year) |
|---|---|---|---|---|---|
| CN | 108446374 | A | 24 August 2018 | None | |
| CN | 112527938 | A | 19 March 2021 | None | |
| CN | 111160050 | A | 15 May 2020 | None | |
| CN | 110489555 | A | 22 November 2019 | None | |
| JP | 2007028658 | A | 01 February 2007 | None | |

Form PCT/ISA/210 (patent family annex) (January 2015)

**REFERENCES CITED IN THE DESCRIPTION**

**Patent documents cited in the description**

- CN 202110415349